# EUROPEAN PATENT APPLICATION

(11) **EP 4 502 238 A1**
(43) Date of publication of application: **05.02.2025**
(21) Application number: 23775013.8
(22) Date of filing: 23.03.2023
(51) Int. Cl.: C25B 9/65, C25B 1/23, C25B 9/00, C25B 9/23, C25B 11/037

(54) **ELECTROCHEMICAL REDUCTION DEVICE**

(30) Priority: 24.03.2022 JP 2022047744
(71) Applicant: Kyushu University, National University Corporation, Nishi-ku Fukuoka-shi Fukuoka 819-0395 (JP)
(72) Inventor: YAMAUCHI Miho, Fukuoka-shi, Fukuoka 819-0395 (JP); ANZAI Akihiko, Fukuoka-shi, Fukuoka 819-0395 (JP); YOSHIZAWA Akina, Fukuoka-shi, Fukuoka 819-0395 (JP); HIGASHI Manabu, Fukuoka-shi, Fukuoka 819-0395 (JP)
(74) Representative: EP&C
(86) International application number: PCT/JP2023/011479
(87) International publication number: WO 2023/182419

(57) **Abstract**

An electrochemical reduction device (200) includes a cell (100) that has a membrane electrode assembly (10), a cathode electrode (11), and an anode electrode (21), and a fluid delivery unit (161) configured to deliver a raw material fluid, which is a fluid containing at least one of CO₂, hydrogen carbonate, and carbonate, to the cell (100), in which the membrane electrode assembly (10) includes an electrolyte membrane (13), and a cathode catalyst layer (12) provided on the electrolyte membrane (13) and that contains a catalyst, in a state where the cathode electrode (11) and the cathode catalyst layer (12) are in contact with each other, the cathode catalyst layer (12) is exposed, and the cathode electrode (11) and the raw material fluid are not in contact with each other, or a cathode contact area, which is an area where the cathode electrode (11) and the raw material fluid are in contact with each other, is smaller than a catalyst contact area, which is an area where an exposed portion in which the cathode catalyst layer is exposed, and the raw material fluid are in contact with each other.

## Description

### TECHNICAL FIELD

The present invention relates to an electrochemical reduction device.

Priority is claimed on Japanese Patent Application No. 2022-047744, filed March 24, 2022, the content of which is incorporated herein by reference.

### BACKGROUND ART

An electrochemical reduction reaction of CO₂ (hereinafter, may be referred to as ECO₂R) for generating a fuel or a chemical raw material from CO₂ using renewable power has attracted attention not only as a low-carbon material synthesis process but also as a new storage method for intermittent renewable energy such as sunlight or wind power. In particular, an electrochemical reduction reaction combined with direct air capture (DAC) in which carbon dioxide in the atmosphere is directly recovered and used has attracted attention.

Patent Document 1 discloses a device that electrochemically reduces CO₂ and the like, the device including an anode for oxidizing a first substance, a first flow path that is in contact with the anode and through which a liquid containing the first substance flows, a cathode for reducing a second substance, a second flow path that is in contact with the cathode and through which a gas containing the second substance flows, a porous separator that is provided between the anode and the cathode, and a power source that is electrically connected to the anode and the cathode. An electrochemical reaction device in which a thickness of the porous separator is 1 µm or more and 500 µm or less, an average pore diameter is more than 0.008 µm and less than 0.45 µm, and a void ratio is more than 0.5 is disclosed.

### Citation List

### Patent Document

Patent Document 1: Japanese Unexamined Patent Application First Publication No. 2022-19744

### SUMMARY OF INVENTION

### Technical Problem

In the electrochemical reaction device described in Patent Document 1, a catalyst layer is provided on a gas diffusion layer. Therefore, during an electrochemical reduction reaction of CO₂, water in the electrolytic solution and the gas diffusion layer come into contact with each other, water is reduced to generate hydrogen (H₂), and the reduction efficiency of CO₂ is decreased. For example, in a case where CO₂ in the atmosphere is recovered by direct air capture (DAC), the concentration of CO₂ is currently approximately 40% by volume. In a case where the concentration of CO₂ is approximately 40% by volume, in the electrochemical reaction device described in Patent Document 1, CO₂ cannot be efficiently reduced, and hydrogen is mainly generated. Therefore, there is a demand for further suppression of the generation of hydrogen.

The present invention has been made in consideration of the above circumstances, and an object thereof is to provide an electrochemical reduction device capable of suppressing the generation of hydrogen and efficiently reducing or hydrogenating CO₂ from a CO₂ fluid having a low concentration. The CO₂ fluid may be a gas mixture containing CO₂ or a mixed liquid including hydrogen carbonate or carbonate generated from CO₂.

### Solution to problem

In order to solve the above problems, the present invention proposes the following aspects.
(1) An electrochemical reduction device according to an aspect of the present invention includes a cell that has a membrane electrode assembly, a cathode electrode, and an anode electrode, and a fluid delivery unit configured to deliver a raw material fluid, which is a fluid containing at least one of CO₂, hydrogen carbonate, and carbonate, to the cell, in which the membrane electrode assembly includes an electrolyte membrane, and a cathode catalyst layer provided on the electrolyte membrane and that contains a catalyst, in a state where the cathode electrode and the cathode catalyst layer are in contact with each other, the cathode catalyst layer is exposed, and the cathode electrode and the raw material fluid are not in contact with each other, or a cathode contact area, which is an area where the cathode electrode and the raw material fluid are in contact with each other, is smaller than a catalyst contact area, which is an area where an exposed portion in which the cathode catalyst layer is exposed, and the raw material fluid are in contact with each other.
(2) In the electrochemical reduction device according to (1), the cathode contact area may be 50% or less of the catalyst contact area.
(3) The electrochemical reduction device according to (1) or (2), in which the cathode electrode may include an opening portion, the catalyst contact area may be an area of the opening portion, and the cathode contact area may be a product of an inner peripheral length of the opening portion and a thickness of the cathode electrode.
(4) The electrochemical reduction device according to any one of (1) to (3), in which the catalyst may be a metal or a semiconductor.
(5) In the electrochemical reduction device according to any one of (1) to (4), a content of the catalyst may be 10% by mass or more with respect to a total mass of the cathode catalyst layer.
(6) The electrochemical reduction device according to any one of (1) to (5), in which the catalyst may be Ag nanoparticles.
(7) The electrochemical reduction device according to any one of (1) to (6), in which at least part of the cathode electrode may be covered with an insulator or a catalyst.
(8) The electrochemical reduction device according to any one of (1) to (7), in which the raw material fluid may be a gas containing the CO₂.
(9) The electrochemical reduction device according to any one of (1) to (8), in which the raw material fluid may be an electrolytic solution containing at least one of the hydrogen carbonate and the carbonate.
(10) The electrochemical reduction device according to (9) may further include a hydrogen carbonate-containing electrolytic solution generation unit configured to generate the electrolytic solution containing at least one of the hydrogen carbonate and the carbonate by bringing the CO₂ into contact with an electrolytic solution. Advantageous Effects of Invention

According to the above-described aspect of the present invention, it is possible to provide an electrochemical reduction device capable of suppressing the generation of hydrogen and efficiently reducing or hydrogenating CO₂ from a CO₂ fluid having a low concentration.

### BRIEF DESCRIPTION OF DRAWINGS

[FIG. 1] A schematic view of an electrochemical reduction device according to a first embodiment.
[FIG. 2] A plan view of a first flow path structure when viewed from a side where a flow path is provided.
[FIG. 3] A plan view of a second flow path structure when viewed from a side where a flow path is provided.
[FIG. 4] A plan view of a state where a cathode electrode and a membrane electrode assembly are in contact with each other when viewed from a cathode electrode side.
[FIG. 5] A schematic view of an electrochemical reduction device according to a second embodiment.
[FIG. 6] A plan view of a state where a cathode electrode and a membrane electrode assembly are in contact with each other when viewed from a cathode electrode side.

### DESCRIPTION OF EMBODIMENTS

### (First Embodiment)

### <Electrochemical Reduction Device>

Hereinafter, an electrochemical reduction device according to a first embodiment will be described with reference to the drawings. The drawings used in the following description may be enlarged for convenience in order to make the features of the present invention easy to understand, and the dimensional ratios and the like of each component may differ from the actual ones. Materials, dimensions, and the like provided in the following description are exemplary examples, but the present invention is not limited thereto, and can be appropriately modified and implemented within the range in which effects of the present invention are exhibited.

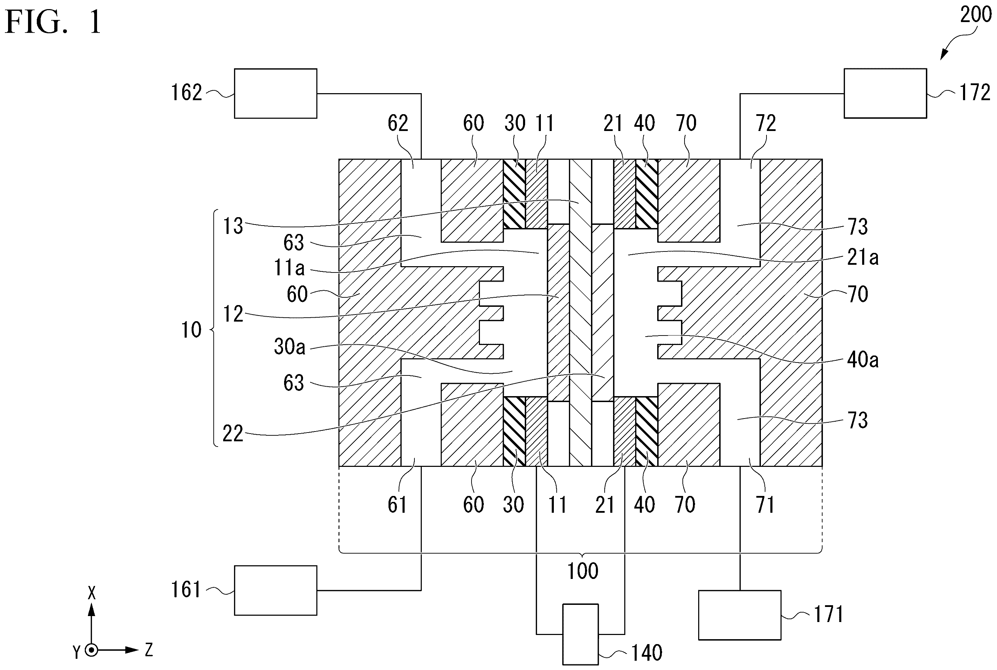

FIG. 1 is an electrochemical reduction device 200 according to the present embodiment. The electrochemical reduction device 200 according to the present embodiment is provided with a cell 100 that includes a membrane electrode assembly 10, a cathode electrode (electrode) 11, and an anode electrode 21, and a fluid delivery unit 161 that delivers a raw material fluid, which is a fluid containing at least one of CO₂, hydrogen carbonate, and carbonate, to the cell 100. The electrochemical reduction device 200 according to the present embodiment is further provided with a power source 140, a product recovery unit 162, an electrolytic solution delivery unit 171, and a waste liquid recovery unit 172. The cell 100 is provided with the membrane electrode assembly 10, a first gasket 30, a second gasket 40, a first flow path structure 60, and a second flow path structure 70. The membrane electrode assembly 10 is electrically connected via the cathode electrode 11 or the anode electrode 21. The cathode electrode 11 and the anode electrode 21 are electrically connected to the power source 140. The first gasket 30 plays a role in enhancing the airtightness of the fluid and maintaining the insulation between the first flow path structure 60 and the cathode electrode 11, but the first gasket 30 need not be provided and may be provided as necessary. The second gasket 40 plays a role in enhancing the airtightness of the fluid and maintaining the insulation between the second flow path structure 70 and the anode electrode 21, but the second gasket 40 need not be provided, and may be provided as necessary.

In the cell 100, the first flow path structure 60, the first gasket 30, the cathode electrode 11, the membrane electrode assembly 10, the anode electrode 21, the second gasket 40, and the second flow path structure 70 are laminated in this order. Each part will be described below.

### (First Flow Path Structure)

In the cell 100, the first flow path structure 60 is disposed in contact with the first gasket 30. The first flow path structure 60 is provided with a first inlet port 61, a first outlet port 62, and a flow path 63.

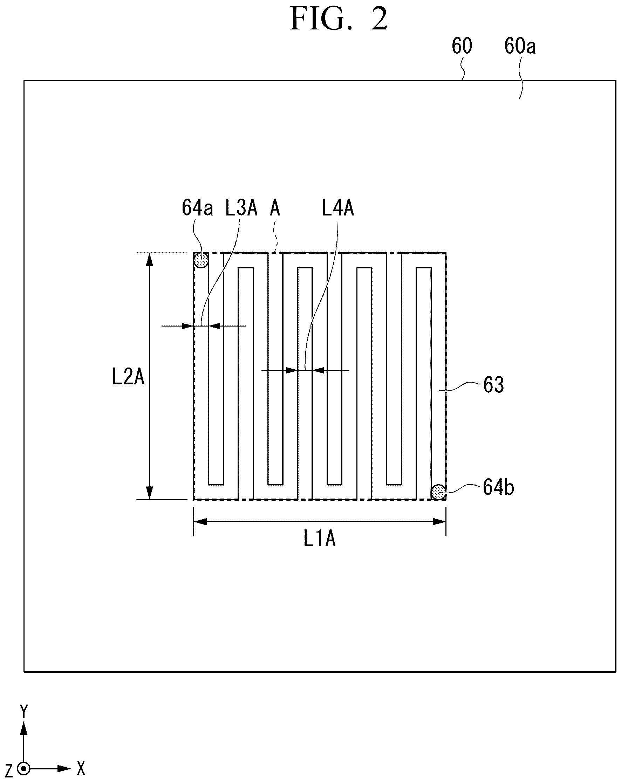

FIG. 2 is a plan view of the first flow path structure 60 when viewed from a side where the flow path 63 is provided. In FIG. 2, the X direction and the Y direction are directions along the surface 60a of the first flow path structure 60. The Y direction is a direction orthogonal to the X direction. The Z direction is a direction orthogonal to the X direction and the Y direction. The first flow path structure 60 is provided with the flow path 63 for bringing the cathode catalyst layer 12 into contact with a raw material fluid described later. As shown in FIG. 2, the flow path 63 is provided with an opening 64a connected to the first inlet port 61 and an opening 64b connected to the first outlet port 62. It is preferable that the flow path 63 provided in the first flow path structure 60 be covered with the cathode catalyst layer 12.

The size of the region where the flow path 63 is formed is not particularly limited as long as the electrochemical reduction reaction of CO₂ proceeds. For example, a length L1A of the region where the flow path 63 is formed in the X direction is 10 to 1000 mm. For example, a length L2A of the region where the flow path 63 is formed in the Y direction is 10 to 1000 mm.

The flow path 63 is formed, for example, in a meandering manner in a formation region A. A width L3A of the flow path 63 is not particularly limited as long as the electrochemical reduction reaction of CO₂ proceeds. For example, the width L3A of the flow path 63 is 0.1 to 10 mm. An interval L4A of the flow path 63 is not particularly limited as long as the electrochemical reduction reaction of CO₂ proceeds. For example, the interval L4A of the flow path 63 is 0.1 to 10 mm. In a case where the first flow path structure 60 has conductivity and is in contact with the cathode electrode 11, the surface of the flow path 63 may be covered with an insulator or a catalyst.

The fluid delivery unit 161 delivers the raw material fluid to the first inlet port 61. The raw material fluid that enters the first inlet port 61 passes through the opening 64a and enters the flow path 63. A reduction reaction proceeds in the membrane electrode assembly 10 with the raw material fluid that enters the flow path 63. A fluid after the reaction (hereinafter, a reduced fluid) passes through the opening 64b and is discharged from the first outlet port 62 to the product recovery unit 162. The fluid delivery unit 161 includes, for example, a tank that stores a raw material fluid, a pump, a flow rate control unit that controls a flow rate, and the like.

### (First Gasket)

In the cell 100, the first gasket 30 is disposed between the first flow path structure 60 and the cathode electrode 11 to maintain airtightness. The material of the first gasket 30 is not particularly limited as long as the airtightness between the first flow path structure 60 and the cathode electrode 11 can be maintained. Examples of the material of the first gasket 30 include silicone rubber.

The first gasket 30 includes an opening portion 30a for bringing the cathode catalyst layer 12 and the raw material fluid into contact with each other. The shape and size of the opening portion 30a are not particularly limited as long as the cathode catalyst layer 12 and the raw material fluid are in contact with each other and airtightness can be maintained. Examples of the shape of the opening portion 30a of the first gasket 30 include a circular shape, an elliptical shape, a polygonal shape, and the like.

The thickness of the first gasket 30 is not particularly limited as long as the airtightness can be maintained. For example, in a case where the raw material fluid is a liquid, the thickness of the first gasket 30 is 1 mm. In a case where the raw material fluid is a gas, it is preferable that the thickness of the first gasket 30 be thin. In a case where the raw material fluid is a gas, the thickness of the first gasket 30 is, for example, 0.5 mm.

### (Cathode Electrode)

The cathode electrode 11 is disposed in contact with the first gasket 30. The cathode electrode 11 includes an opening portion 11a for bringing the raw material fluid into contact with the cathode catalyst layer 12. The material of the cathode electrode 11 is, for example, Ag, Au, Zn, Ti, carbon, or stainless steel.

The shape and size of the opening portion 11a are not particularly limited. Examples of the shape of the opening portion 11a include a circular shape, an elliptical shape, a polygonal shape, and the like. It is preferable that the shape and size of the opening portion 11a be the same as those of the opening portion 30a of the first gasket 30. In a case where the shape and size of the opening portion 11a and the shape and size of the opening portion 30a match each other, the opening portion 11a and the opening portion 30a of the first gasket 30 overlap with each other, so that the surface in which the cathode electrode 11 and the raw material fluid are in contact with each other can be made only an inner peripheral surface of the opening portion 11a of the cathode electrode 11.

The thickness of the cathode electrode 11 is not particularly limited, but it is preferable that the thickness be thin in order to reduce the contact area with the raw material fluid. The thickness of the cathode electrode 11 is, for example, 0.1 mm.

In a case where at least part of the cathode electrode 11 (contact surface with the raw material fluid) is covered with an insulator or a catalyst, the first gasket 30 and the cathode electrode 11 are brought in close contact with each other, and thus the cathode electrode and the raw material fluid can be brought into a state of not being in contact with each other. As a result, the amount of hydrogen generated during the electrochemical reduction reaction can be reduced.

### (Membrane Electrode Assembly)

In the cell 100, the membrane electrode assembly 10 is provided with a catalyst layer and an electrolyte membrane. Specific configurations of the membrane electrode assembly 10 include (1) a membrane electrode assembly 10 having a cathode catalyst layer 12 and an electrolyte membrane 13, (2) a membrane electrode assembly 10 having an anode catalyst layer 22 and an electrolyte membrane 13, or (3) a membrane electrode assembly 10 having a cathode catalyst layer 12, an electrolyte membrane 13, and an anode catalyst layer 22. The membrane electrode assembly 10 is disposed between the cathode electrode 11 and the anode electrode 21. The cathode catalyst layer 12 or the anode catalyst layer 22 is provided on the electrolyte membrane 13. The membrane electrode assembly 10 is in contact with the cathode electrode 11 or the anode electrode 21 having conductivity. In the present embodiment, the membrane electrode assembly 10 of (3) will be described, but the present invention is not limited thereto.

### "Cathode Catalyst Layer"

The cathode catalyst layer 12 is provided on the electrolyte membrane 13 and comes into contact with the raw material fluid. The cathode catalyst layer 12 normally has conductivity, but need not have conductivity. It is preferable that the cathode catalyst layer 12 have conductivity. In a case where the cathode catalyst layer 12 has conductivity, a reduction reaction can be performed on the surface of the cathode catalyst layer 12 even in a state of being partially in contact with the cathode electrode 11. In the cathode catalyst layer 12, a reduction reaction of at least one of CO₂, a bicarbonate ion, and a carbonic acid ion is performed from ions supplied from the anode catalyst layer 22 and a raw material fluid supplied through the first flow path structure 60. The reduction reaction of CO₂, a bicarbonate ion, or a carbonic acid ion occurs on the surface of the cathode catalyst layer 12. A gaseous gas product such as carbon monoxide or methane generated by the reduction reaction of at least one of CO₂, a bicarbonate ion, or a carbonic acid ion is discharged from the first outlet port 62. The reduced fluid discharged from the first outlet port 62 is recovered by the product recovery unit 162.

The cathode catalyst layer 12 contains a catalyst (hereinafter, may be referred to as a cathode catalyst). The content of the catalyst is preferably 1% by mass or more with respect to the total mass of the cathode catalyst layer 12. The content of the catalyst is more preferably 10% by mass or more. The content of the catalyst is still more preferably 50% by mass or more. The content of the catalyst is preferably 99% by mass or less. The content of the catalyst is more preferably 80% by mass or less.

The catalyst in the cathode catalyst layer 12 is a metal or a semiconductor. Examples of the metal include metals such as Ag, Au, Al, Cu, Pt, Pd, Ni, Sn, Zn, Fe, In, Ga, Cd, Pb, and Ti, or alloys containing these metals. Examples of the semiconductor include a P-type semiconductor having a potential of the lower end of the conductor on the negative side of the reduction potential of the carbon compound. Examples of the P-type semiconductor include Si, oxides such as Cu₂O and Fe₂O₃, phosphorus compounds such as InP and InGaP, and nitrogen compounds such as GaN. As the metal used as the catalyst, Ag or Cu is particularly preferable. The shape of the catalyst is not particularly limited. Examples of the shape of the catalyst include a particle shape, a scale shape, a columnar shape, and the like. As the catalyst, Ag particles, Cu particles, or alloy particles thereof are preferable. The catalyst can be appropriately selected according to the target product after reduction.

The average particle diameter of the catalyst is not particularly limited, but is 1 nm to 1000 µm. The average particle diameter of the catalyst is more preferably 500 nm or less. The average particle diameter of the catalyst can be obtained by observing the cathode catalyst layer 12 with a scanning electron microscope and averaging the circle equivalent diameters of 50 catalysts randomly selected in the obtained observation image. The term circle equivalent diameter refers to the diameter of a true circle corresponding to the area of the obtained image.

The cathode catalyst layer 12 may further contain a binder. The binder is not particularly limited, but for example, an electrolyte polymer is preferable. Examples of the electrolyte polymer include Nafion (registered trademark), which is a copolymer of a fluorine resin based on sulfonated tetrafluoroethylene. The content of the binder is, for example, 5% by mass to 50% by mass.

The cathode catalyst layer 12 may further contain a conductive auxiliary agent such as acetylene black and a carbon nanotube.

The sheet resistance of the cathode catalyst layer 12 is not particularly limited as long as an electrochemical reduction reaction occurs on the cathode catalyst layer 12. For example, the sheet resistance of the cathode catalyst layer 12 is 0.03 S2/sq. to 100 S2/sq.

### "Electrolyte Membrane"

The electrolyte membrane 13 is a base material that forms the membrane electrode assembly 10. The electrolyte membrane 13 can separate the cathode catalyst layer 12 and the anode catalyst layer 22 from each other, and some of the ions can be moved between the cathode catalyst layer 12 and the anode catalyst layer 22. The electrolyte membrane 13 is not particularly limited as long as the cathode catalyst layer 12 and the anode catalyst layer 22 can be separated from each other, and some of the ions can be moved between the cathode catalyst layer 12 and the anode catalyst layer 22. Examples of the electrolyte membrane 13 include an ion exchange membrane. Examples of the ion exchange membrane include a Nafion (registered trademark) membrane, which is a copolymer of a fluorine resin based on sulfonated tetrafluoroethylene, and Sustainion (registered trademark) X37-50 Grade RT Membrane, which is a copolymer of styrene and vinyl benzyl chloride functionalized with 1-methylimidazole.

The thickness of the electrolyte membrane 13 is not particularly limited as long as the cathode catalyst layer 12 and the anode catalyst layer 22 can be separated from each other, and some of the ions can be moved between the cathode catalyst layer 12 and the anode catalyst layer 22. For example, the thickness of the electrolyte membrane 13 is 5 µm to 500 µm.

### "Anode Catalyst Layer"

The anode catalyst layer 22 is provided on the electrolyte membrane 13. The anode catalyst layer 22 is electrically connected to the anode electrode 21. The anode catalyst layer 22 promotes the oxidation of the electrolytic solution. It is preferable that the area of the anode catalyst layer 22 be equal to the area of an opening portion 40a of the second gasket 40. Examples of the material of the anode catalyst layer 22 include Ir, Co, Ni, cobalt, Fe, iridium, or oxides of these metals (iridium oxide and cobalt oxide). The anode catalyst layer 22 may have fluid permeability, and examples thereof include a conductive porous body such as Ni foam. The anode catalyst layer 22 oxidizes the electrolytic solution that flows in from a second inlet port 71 to generate oxygen, hydrogen ions, and the like. The product generated by oxidizing the electrolytic solution passes through a second outlet port 72 and is discharged. The discharged electrolytic solution after oxidation is recovered by the waste liquid recovery unit 172.

The thickness of the anode catalyst layer 22 is not particularly limited. For example, it is 0.5 mm to 10.0 mm.

### (Anode Electrode)

In the cell 100, the anode electrode 21 is disposed between the membrane electrode assembly 10 and the second gasket 40. The anode electrode 21 includes an opening portion 21a for bringing the anode catalyst layer 22 into contact with the electrolytic solution. The shape and size of the opening portion 21a of the anode electrode 21 are not particularly limited. Examples of the shape of the opening portion 21a include a circular shape, an elliptical shape, a polygonal shape, and the like. It is preferable that the shape and size of the opening portion 21a be the same as those of the opening portion 11a of the cathode electrode 11.

For example, the material of the anode electrode 21 is a metal such as Ni, Ti, or Fe, or an alloy containing these metals.

### (Second Gasket)

In the cell 100, the second gasket 40 is disposed between the anode electrode 21 and the second flow path structure 70 to maintain airtightness. The material of the second gasket 40 is not particularly limited as long as the airtightness between the anode electrode 21 and the second flow path structure 70 can be maintained. Examples of the material of the second gasket 40 include silicone rubber.

The second gasket 40 includes an opening portion 40a for bringing the electrolyte membrane 13 into contact with an electrolytic solution (electrolytic solution on the anode side) described later. The shape and size of the opening portion 40a are not particularly limited as long as the electrolyte membrane 13 and the electrolytic solution are in contact with each other and airtightness can be maintained. Examples of the shape of the opening portion 40a of the second gasket 40 include a circular shape, an elliptical shape, a polygonal shape, and the like.

The thickness of the second gasket 40 is not particularly limited as long as the airtightness can be maintained. The thickness of the second gasket 40 is, for example, 1 mm.

### (Second Flow Path Structure)

In the cell 100, the second flow path structure 70 is disposed in contact with the second gasket 40. The second flow path structure 70 is provided with a second inlet port 71, a second outlet port 72, and a flow path 73.

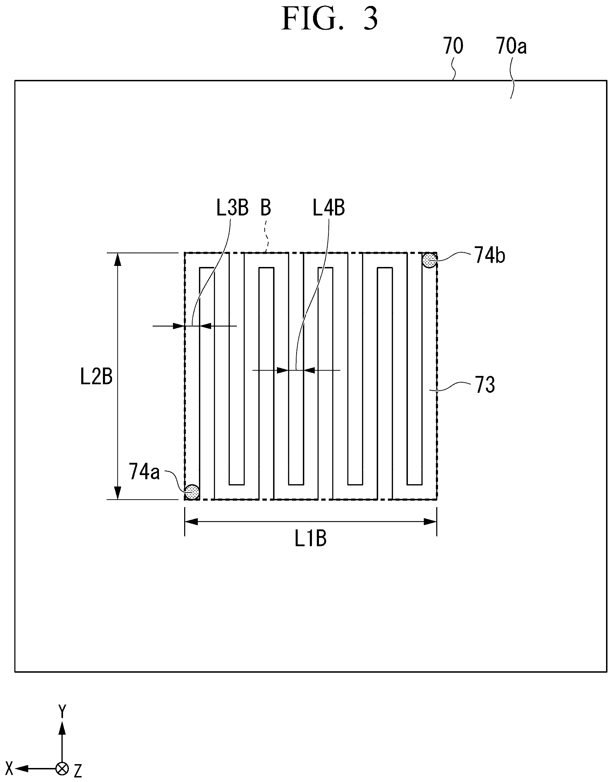

FIG. 3 is a plan view of the second flow path structure 70 when viewed from the side where the flow path 73 is provided. In FIG. 3, the X direction and the Y direction are directions along the surface 70a of the second flow path structure 70. The Y direction is a direction orthogonal to the X direction. The Z direction is a direction orthogonal to the X direction and the Y direction. The second flow path structure 70 is provided with the flow path 73 for bringing the anode catalyst layer 22 and the electrolytic solution into contact with each other. As shown in FIG. 3, the flow path 73 is provided with an opening 74a connected to the second inlet port 71 and an opening 74b connected to the second outlet port 72. It is preferable that the flow path 73 provided in the second flow path structure 70 be covered with the anode catalyst layer 22.

The size of the region where the flow path 73 is formed is not particularly limited as long as the oxidation reaction of the electrolytic solution proceeds. For example, a length L1B of the region where the flow path 73 is formed in the X direction is 10 to 1000 mm. For example, a length L2B of the region where the flow path 73 is formed in the Y direction is 10 to 1000 mm.

The flow path 73 is formed, for example, in a meandering manner in a formation region B. The width L3B of the flow path 73 is not particularly limited as long as the electrochemical oxidation reaction of the electrolytic solution proceeds. The width L3B of the flow path 73 is, for example, 0.1 to 10 mm. An interval L4B of the flow path 73 is not particularly limited as long as the electrochemical oxidation reaction of the electrolytic solution proceeds. The interval L4B of the flow path 73 is, for example, 0.1 to 10 mm.

The electrolytic solution delivery unit 171 delivers the electrolytic solution to the second inlet port 71. The electrolytic solution that enters the second inlet port 71 passes through the opening 74a and enters the flow path 73. In the flow path 73, the oxidation reaction of the electrolytic solution by the anode catalyst layer 22 proceeds, and the electrolytic solution after the reaction (hereinafter, an electrolytic solution after oxidation) passes through the opening 74b and is discharged from the second outlet port 72 to the waste liquid recovery unit 172. The electrolytic solution delivery unit 171 includes, for example, a tank that stores the electrolytic solution, a pump, a flow rate control unit that controls the flow rate, and the like.

### (Electrode Contact Area, Exposed Area, Catalyst Contact Area, and Cathode Contact Area)

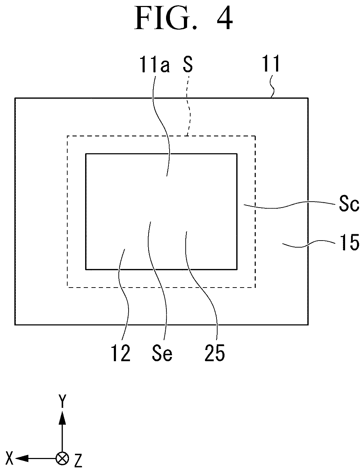

FIG. 4 shows a plan view of a state where the cathode electrode 11 and the membrane electrode assembly 10 are in contact with each other when viewed from the cathode electrode 11 side. In FIG. 4, the X direction and the Y direction are directions along the surface 15 of the cathode electrode 11. The Y direction is a direction orthogonal to the X direction. The Z direction is a direction orthogonal to the X direction and the Y direction.

The electrochemical reduction device 200 is provided with an exposed portion 25 in which the cathode catalyst layer 12 is exposed in a state where the cathode electrode 11 and the cathode catalyst layer 12 are in contact with each other.

An electrode contact area Sc, which is the area where the cathode catalyst layer 12 and the cathode electrode 11 are in contact with each other, is smaller than an exposed area Se, which is the area (area of the exposed portion 25) where the cathode catalyst layer 12 is exposed.

In the present embodiment, the electrode contact area Sc is a difference (S - Se) between the area S of the cathode catalyst layer 12 and the exposed area Se. Since the electrode contact area Sc is smaller than the exposed area Se, the contact between the cathode electrode 11 and the electrolytic solution is suppressed, and the generation of hydrogen is suppressed. The electrode contact area Sc is not particularly limited as long as the reduction reaction of CO₂ can be sufficiently performed. The electrode contact area Sc is 80% or less of the exposed area Se. The lower limit of the electrode contact area Sc is, for example, 1% of the exposed area Se. The electrode contact area Sc is more preferably 10% or more of the exposed area Se.

In the present embodiment, the cathode contact area, which is the area where the cathode electrode 11 and the raw material fluid are in contact with each other, is smaller than the catalyst contact area, which is the area where the exposed portion 25 of the cathode catalyst layer 12 and the raw material fluid are in contact with each other (area where the cathode catalyst layer 12 and the raw material fluid are in contact with each other). Since the cathode contact area is smaller than the catalyst contact area, it is possible to reduce the generation of hydrogen during the reduction reaction of CO₂. The cathode contact area is preferably 50% or less of the catalyst contact area. The catalyst contact area is more preferably 30% or less. The catalyst contact area is still more preferably 10% or less. Since the cathode contact area is preferably as small as possible, the lower limit is 0%. In a case where the cathode contact area is 0%, this means that the cathode electrode 11 and the raw material fluid are not in contact with each other.

The electrode contact area Sc, the exposed area Se, the cathode contact area, and the catalyst contact area can be obtained by the following method, for example, in a case where the cathode electrode 11 includes the opening portion 11a. The area and the inner peripheral length of the opening portion 11a are obtained from the image data of the cathode electrode 11 using image analysis software. The obtained area of the opening portion 11a is defined as an exposed area Se and a catalyst contact area. The thickness of the cathode electrode 11 is measured by a known method, and the product of the obtained thickness of the cathode electrode 11 and the inner peripheral length of the opening portion 11a is defined as the cathode contact area. In a case where the electrolyte membrane 13 has light transmittance, the electrode contact area Sc can be obtained from the image data of the membrane electrode assembly 10 using image analysis software.

Hereinbefore, the electrochemical reduction device 200 according to the present embodiment has been described in detail. According to the electrochemical reduction device 200 of the present embodiment, the generation of hydrogen can be suppressed. Therefore, even in a case where the concentration of CO₂ is low, CO₂ can be efficiently reduced.

The electrochemical reduction device 200 may be further provided with a hydrogen carbonate-containing electrolytic solution generation unit (not shown) that generates an electrolytic solution containing hydrogen carbonate by bringing CO₂ into contact with the electrolytic solution. Examples of the hydrogen carbonate-containing electrolytic solution generation unit include a bubbler that introduces CO₂ into the electrolytic solution to perform bubbling.

In the present embodiment, the electrochemical reduction device 200 is provided with the first gasket 30, but the first gasket 30 need not be provided. In addition, in a case where the first gasket 30 is not provided, the first flow path structure 60 may have conductivity. In a case where the first gasket 30 is not provided and the first flow path structure 60 has conductivity, it is preferable that the entire flow path through which the raw material fluid passes be covered with a catalyst or an insulator in the first flow path structure 60. When the flow path is covered with the catalyst, the raw material fluid and the first flow path structure 60 having conductivity do not come into direct contact with each other, and the generation of hydrogen can be reduced. In addition, the reduction reaction can be further promoted.

### <Electrochemical Reduction Method>

Next, an electrochemical reduction method according to the present embodiment will be described. Hereinafter, a method of performing an electrochemical reduction method using the electrochemical reduction device 200 will be described, but the present invention is not limited to the method using the electrochemical reduction device 200.

The electrochemical reduction method according to the present embodiment is provided with a raw material fluid delivery step of delivering a raw material fluid to the cathode catalyst layer 12 of the membrane electrode assembly 10, an electrolytic solution delivery step of delivering an electrolytic solution to the anode catalyst layer 22, and an electrochemical reduction step of electrochemically reducing at least one of CO₂, a bicarbonate ion, and a carbonic acid ion. In the present embodiment, for example, each step is performed in parallel.

### (Raw Material Fluid Delivery Step)

In the raw material fluid delivery step, the raw material fluid is delivered from the fluid delivery unit 161 to the cathode catalyst layer 12 of the membrane electrode assembly 10. In addition, a product associated with the reduction reaction that occurs in the cathode catalyst layer 12 is delivered to the product recovery unit 162.

The raw material fluid is a mixture of at least one of CO₂, hydrogen carbonate, and carbonate, and at least one of a liquid and a gas. Examples of the raw material fluid include a gas containing CO₂, an electrolytic solution containing at least one of hydrogen carbonate and carbonate, and the like, but the raw material fluid is not limited thereto.

### "Gas containing CO₂"

The concentration of CO₂ in the gas containing CO₂ is preferably 1% by volume or more with respect to the total volume of the gas containing CO₂. The concentration of CO₂ in the gas containing CO₂ is more preferably 50% by volume or more. The concentration of CO₂ in the gas containing CO₂ is still more preferably 90% by volume or more. The upper limit of the concentration of CO₂ is 100% by volume.

The flow rate in the gas containing CO₂ can be appropriately set according to the area of the cathode catalyst layer 12 and the like. For example, the flow rate of the gas containing CO₂ is 1 to 30 sccm.

### "Electrolytic Solution containing at least One of Hydrogen Carbonate and Carbonate"

The electrolytic solution containing hydrogen carbonate is an electrolytic solution containing water (H₂O) and at least one of hydrogen carbonate and carbonate. For example, the hydrogen carbonate is potassium hydrogen carbonate or sodium hydrogen carbonate. The carbonate is potassium carbonate or sodium carbonate. As the electrolytic solution containing at least one of hydrogen carbonate and carbonate, for example, an electrolytic solution prepared by bubbling a gas containing CO₂ in a potassium hydroxide aqueous solution or a sodium hydroxide aqueous solution may be used.

The concentration of the hydrogen carbonate or carbonate is not particularly limited, but is, for example, 0.5 to 3.3 mol/L. When the concentration of the hydrogen carbonate is in a range of 2.0 to 3.3 mol/L, the generation of hydrogen can be further reduced.

The pH of the electrolytic solution containing at least one of hydrogen carbonate and carbonate is 7 to 10. When the pH of the electrolytic solution containing hydrogen carbonate is 7 to 10, the reduction reaction can easily proceed.

The flow rate of the electrolytic solution can be appropriately set according to the area of the anode electrode 21.

### (Electrolytic Solution Delivery Step)

In the electrolytic solution delivery step, the electrolytic solution is delivered from the electrolytic solution delivery unit 171 to the anode catalyst layer 22. In addition, a product associated with the oxidation reaction that occurs in the anode catalyst layer 22 is delivered to the waste liquid recovery unit 172.

The electrolytic solution is an electrolytic solution in which the solvent is water, an organic substance, or a mixture thereof. Examples of the electrolytic solution include an electrolytic solution containing at least one or more selected from the group consisting of a hydroxide ion, a potassium ion, a hydrogen ion, a sodium ion, a lithium ion, a chloride ion, a sulfate ion, a carbonic acid ion, and a nitrate ion. Examples of the electrolyte include potassium hydroxide and sodium hydroxide.

The pH of the electrolytic solution is 5 to 15. The pH of the electrolytic solution is preferably 6 or more. When the pH of the electrolytic solution is 5 to 15, the oxidation reaction in the anode catalyst layer 22 can easily proceed.

The flow rate of the electrolytic solution can be appropriately set according to the area of the anode catalyst layer 22 and the like.

### (Electrochemical Reduction Step)

In the electrochemical reduction step, at least one of CO₂, a bicarbonate ion, or a carbonic acid ion is electrochemically reduced. Specifically, a voltage is applied between the cathode electrode 11 and the anode electrode 21 from the power source 140 to supply a current. When a current flows between the cathode electrode 11 and the anode electrode 21, an oxidation reaction proceeds in the vicinity of the anode catalyst layer 22, and a reduction reaction proceeds in the vicinity of the cathode catalyst layer 12. In the following reaction, CO is described as an example, but in the electrochemical reduction step, CH₄ or the like may be generated. The reaction with the cathode catalyst layer 12 and the anode catalyst layer 22 will be described separately.

When a current is supplied between the cathode electrode 11 and the anode electrode 21 from the power source 140, an oxidation reaction of water occurs with the electrolytic solution in contact with the anode catalyst layer 22. Specifically, in a case where the pH is 7 or less, as shown in Formula (1), water contained in the electrolytic solution is oxidized to generate oxygen and a hydrogen ion.

2H₂O ⁻ 4H⁺ + Q₂ + 4e⁻ ... (1)

In a case where the pH is more than 7, as shown in Formula (2A), OH⁻ contained in the electrolytic solution is oxidized to generate oxygen and water. In addition, as shown in Formula (2B), in the electrolyte membrane 13, a proton in the electrolyte membrane is received to form H₃O⁺, and the proton is supplied to the cathode catalyst layer 12. The electrolyte membrane 13 receives protons from water, and water becomes OH⁻.

40H⁻ → O₂ + 2H₂O + 4e⁻ → (2A)

H₂O + H⁺ → H₃O⁺ ... (2B)

In a case where the pH of the electrolytic solution on the anode side is 7 or less, H⁺ generated in the anode catalyst layer 22 moves through the electrolytic solution and the electrolyte membrane 13 and reaches the cathode catalyst layer 12. An electrochemical reduction reaction of CO₂, a bicarbonate ion, or a carbonic acid ion proceeds by a current (e⁻) supplied from the power source 140 and H⁺ reaching the cathode catalyst layer 12. In the case of a gas containing CO₂, specifically, as shown in Formula (3), CO₂ in a gas containing CO₂ supplied to the cathode catalyst layer 12 is reduced to carbon monoxide (CO). That is, CO is generated by electrochemically reducing CO₂.

CO₂+2H⁺ + 2e⁻ → CO + H₂O (3)

On the other hand, in the case of the electrolytic solution containing a bicarbonate ion, as shown in Formula (4), the bicarbonate ion (HCO₃⁻) contained in the electrolytic solution containing a bicarbonate ion is generated in the anode catalyst layer 22, converted into CO₂ by H⁺ which moves through the electrolyte membrane 13, and CO₂ is then reduced by the cathode catalyst layer 12 as shown in Formula (3) to generate CO. The reaction in the membrane electrode assembly 10 proceeds on the catalyst of the cathode catalyst layer 12.

HCO₃⁻ + H⁺ → H₂O + CO₂ ... (4)

The voltage applied between the anode electrode 21 and the cathode electrode 11 is, for example, 0 V to - 4.0 V. The voltage is more preferably - 1.0 V to - 2.5 V. When the voltage is - 1.0 V to - 2.5 V, an electrochemical reduction reaction of CO₂ can proceed in a state where the energy conversion efficiency is higher.

Hereinbefore, the electrochemical reduction method according to the first embodiment has been described. According to the electrochemical reduction method of the present embodiment, the generation of hydrogen can be suppressed. Therefore, the reduction efficiency of CO₂ can be improved, and CO₂ can be efficiently reduced even in a case where the concentration of CO₂ is low.

### (Second Embodiment)

Next, an electrochemical reduction device 200A according to a second embodiment will be described. The description of the components overlapping with the electrochemical reduction device 200 according to the first embodiment may be omitted.

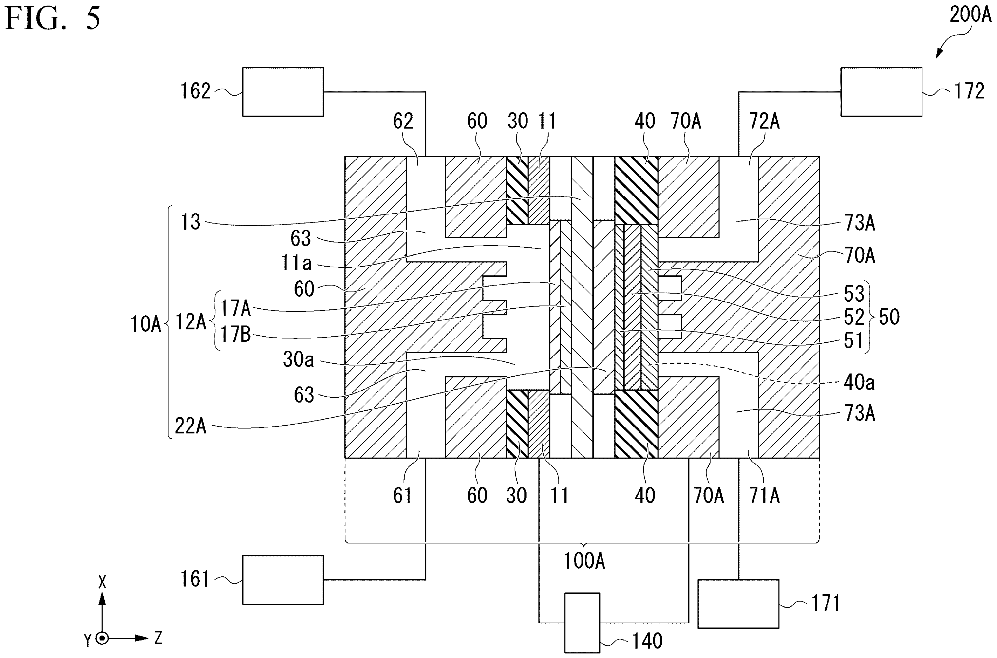

FIG. 5 shows an electrochemical reduction device 200A according to the present embodiment. The electrochemical reduction device 200A according to the present embodiment is provided with a cell 100A that includes a membrane electrode assembly 10A, a cathode electrode (electrode) 11, and a second flow path structure 70A that is an anode electrode, and a fluid delivery unit 161 that delivers a raw material fluid, which is a fluid containing at least one of CO₂, hydrogen carbonate, and carbonate, to the cell 100A. The electrochemical reduction device 200A according to the present embodiment is further provided with a power source 140, a product recovery unit 162, an electrolytic solution delivery unit 171, and a waste liquid recovery unit 172. The cell 100A is provided with a membrane electrode assembly 10A, a first gasket 30, a second gasket 40, and a first flow path structure 60. The cathode electrode 11 and the second flow path structure 70A are electrically connected to the power source 140. The first gasket 30 plays a role in enhancing the airtightness of the fluid and maintaining the insulation between the first flow path structure 60 and the cathode electrode 11, but the first gasket 30 need not be provided and may be provided as necessary. The second gasket 40 plays a role in enhancing the airtightness of the fluid, but the second gasket 40 need not be provided and may be provided as necessary.

In the cell 100A, the first flow path structure 60, the first gasket 30, the cathode electrode 11, the membrane electrode assembly 10A, the fluid-permeable conductive membrane 50, and the second flow path structure 70A are laminated in this order. The second gasket 40 is disposed between the membrane electrode assembly 10A and the second flow path structure 70A. Each part will be described below.

### (First Flow Path Structure)

In the cell 100A, the first flow path structure 60 is disposed in contact with the first gasket 30. The first flow path structure 60 is provided with a first inlet port 61, a first outlet port 62, and a flow path 63.

The fluid delivery unit 161 delivers the raw material fluid to the first inlet port 61. The raw material fluid that enters the first inlet port 61 passes through the opening 64a and enters the flow path 63. The reduction reaction proceeds in the membrane electrode assembly 10A with the raw material fluid that enters the flow path 63. The reduced fluid passes through the opening 64b and is discharged from the first outlet port 62 to the product recovery unit 162. The fluid delivery unit 161 includes, for example, a tank that stores a raw material fluid, a pump, a flow rate control unit that controls a flow rate, and the like.

### (First Gasket)

In the cell 100A, the first gasket 30 is disposed between the first flow path structure 60 and the cathode electrode 11 to maintain airtightness. The material of the first gasket 30 is not particularly limited as long as the airtightness between the first flow path structure 60 and the cathode electrode 11 can be maintained. Examples of the material of the first gasket 30 include silicone rubber.

The first gasket 30 includes an opening portion 30a for bringing the second cathode catalyst layer 17A described later with the raw material fluid into contact. The shape and size of the opening portion 30a are not particularly limited as long as the second cathode catalyst layer 17A and the raw material fluid are in contact with each other and airtightness can be maintained. Examples of the shape of the opening portion 30a of the first gasket 30 include a circular shape, an elliptical shape, a polygonal shape, and the like.

The thickness of the first gasket 30 is not particularly limited as long as the airtightness can be maintained. For example, in a case where the raw material fluid is a liquid, the thickness of the first gasket 30 is 1 mm. In a case where the raw material fluid is a gas, it is preferable that the thickness of the first gasket 30 be thin. In a case where the raw material fluid is a gas, the thickness of the first gasket 30 is, for example, 0.5 mm.

### (Cathode Electrode)

The cathode electrode 11 is disposed in contact with the first gasket 30. The cathode electrode 11 includes an opening portion 11a for bringing the raw material fluid into contact with the second cathode catalyst layer 17A. The material of the cathode electrode 11 is, for example, Ag, Au, Zn, Ti, carbon, or stainless steel.

The shape and size of the opening portion 11a are not particularly limited. Examples of the shape of the opening portion 11a include a circular shape, an elliptical shape, a polygonal shape, and the like. It is preferable that the shape and size of the opening portion 11a be the same as those of the opening portion 30a of the first gasket 30. In a case where the shape and size of the opening portion 11a and the shape and size of the opening portion 30a match each other, the opening portion 11a and the opening portion 30a of the first gasket 30 overlap with each other, so that the surface in which the cathode electrode 11 and the raw material fluid are in contact with each other can be made only an inner peripheral surface of the opening portion 11a of the cathode electrode 11.

The thickness of the cathode electrode 11 is not particularly limited, but it is preferable that the thickness be thin in order to reduce the contact area with the raw material fluid. The thickness of the cathode electrode 11 is, for example, 0.1 mm.

In a case where at least a part of the cathode electrode 11 (contact surface with the raw material fluid) is covered with an insulator or a catalyst, the first gasket 30 and the cathode electrode 11 are brought in close contact with each other, and thus the cathode electrode and the raw material fluid can be brought into a state of not being in contact with each other. As a result, the amount of hydrogen generated during the electrochemical reduction reaction can be reduced.

### (Membrane Electrode Assembly)

In the cell 100A, the membrane electrode assembly 10A is provided with a catalyst layer and an electrolyte membrane. A specific configuration of the membrane electrode assembly 10A is (1) a membrane electrode assembly having a cathode catalyst layer and an electrolyte membrane in this order, (2) a membrane electrode assembly having an anode catalyst layer and an electrolyte membrane in this order, or (3) a membrane electrode assembly having a cathode catalyst layer, an electrolyte membrane, and an anode catalyst layer in this order. In a case where the membrane electrode assembly 10A is (1), a membrane serving as an anode catalyst layer may be disposed on a surface of the electrolyte membrane opposite to a surface on which the cathode catalyst layer is provided. In a case where the membrane electrode assembly 10A is (2), a membrane serving as a cathode catalyst layer may be disposed on a surface of the electrolyte membrane opposite to a surface on which the anode catalyst layer is provided. The membrane electrode assembly 10A is disposed between the cathode electrode 11 and the second flow path structure 70A. In the above-described membrane electrode assembly 10A, the cathode catalyst layer 12A or the anode catalyst layer 22A is provided on the electrolyte membrane 13. The membrane electrode assembly 10A is electrically connected to the cathode electrode 11 and the second flow path structure 70A. In the present embodiment, the membrane electrode assembly 10A of (3) will be described, but the present invention is not limited thereto.

### "Cathode Catalyst Layer"

The cathode catalyst layer 12A is provided on the electrolyte membrane 13 and comes into contact with the raw material fluid. In the second embodiment, the cathode catalyst layer 12A is provided with a first cathode catalyst layer 17B and a second cathode catalyst layer 17A.

### "First Cathode Catalyst Layer 17B"

In the second embodiment, the first cathode catalyst layer 17B is directly provided on the electrolyte membrane 13 and is in contact with the second cathode catalyst layer 17A. The first cathode catalyst layer 17B may have conductivity or need not have conductivity. It is preferable that the first cathode catalyst layer 17B have conductivity. In a case where the first cathode catalyst layer 17B has conductivity, a reduction reaction can be performed on the surface of the first cathode catalyst layer 17B even in a state of being partially in contact with the second cathode catalyst layer 17A. In the first cathode catalyst layer 17B, a reduction reaction of at least one of CO₂, a bicarbonate ion, or a carbonic acid ion is performed from ions supplied from the anode catalyst layer 22A and a raw material fluid supplied through the first flow path structure 60. The reduction reaction of CO₂, a bicarbonate ion, or a carbonic acid ion occurs on the surface of the first cathode catalyst layer 17B. A gaseous gas product such as carbon monoxide or methane generated by the reduction reaction of at least one of CO₂, a bicarbonate ion, or a carbonic acid ion is discharged from the first outlet port 62. The reduced fluid discharged from the first outlet port 62 is recovered by the product recovery unit 162.

The first cathode catalyst layer 17B contains a catalyst. The content of the catalyst is preferably 1% by mass or more with respect to the total mass of the first cathode catalyst layer 17B. The content of the catalyst is more preferably 10% by mass or more. The content of the catalyst is still more preferably 50% by mass or more. The content of the catalyst is preferably 99% by mass or less.

The catalyst in the first cathode catalyst layer 17B is a metal or a semiconductor. Examples of the metal include metals such as Ag, Au, Al, Cu, Pt, Pd, Ni, Sn, Zn, Fe, In, Ga, Cd, Pb, and Ti, or alloys containing these metals. Examples of the semiconductor include a P-type semiconductor having a potential of the lower end of the conductor on the negative side of the reduction potential of the carbon compound. Examples of the P-type semiconductor include Si, oxides such as Cu₂O and Fe₂O₃, phosphorus compounds such as InP and InGaP, and nitrogen compounds such as GaN. As the metal used as the catalyst, Ag or Cu is particularly preferable. The shape of the catalyst is not particularly limited. Examples of the shape of the catalyst include a particle shape, a scale shape, a columnar shape, and the like. As the catalyst, Ag particles, Cu particles, or alloy particles thereof are preferable. The catalyst can be appropriately selected according to the target product after reduction.

The average particle diameter of the catalyst is not particularly limited, but is 1 nm to 1000 µm. The average particle diameter of the catalyst is more preferably 500 nm or less. The average particle diameter of the catalyst can be obtained by observing the first cathode catalyst layer 17B with a scanning electron microscope and averaging the circle equivalent diameters of 50 catalysts randomly selected in the obtained observation image. The term circle equivalent diameter refers to the diameter of a true circle corresponding to the area of the obtained image.

The first cathode catalyst layer 17B may further contain a binder. The binder is not particularly limited, but for example, an electrolyte polymer is preferable. Examples of the electrolyte polymer include Nafion (registered trademark), which is a copolymer of a fluorine resin based on sulfonated tetrafluoroethylene. The content of the binder is, for example, 5% by mass to 50% by mass.

The first cathode catalyst layer 17B may further contain a conductive auxiliary agent such as acetylene black and a carbon nanotube.

The sheet resistance of the first cathode catalyst layer 17B is not particularly limited as long as the electrochemical reduction reaction occurs on the first cathode catalyst layer 17B. For example, the sheet resistance of the first cathode catalyst layer 17B is 0.03 S2/sq. to 100 S2/sq.

### "Second Cathode Catalyst Layer 17A"

In the second embodiment, the second cathode catalyst layer 17A is disposed on the first cathode catalyst layer 17B. In the second embodiment, it is preferable that the second cathode catalyst layer 17A have conductivity. In a case where the second cathode catalyst layer 17A has conductivity, a reduction reaction can be performed on the surface of the second cathode catalyst layer 17A even in a state of being partially in contact with the cathode electrode 11, and a reduction reaction can be performed on the surface of the first cathode catalyst layer 17B. In the second cathode catalyst layer 17A, a reduction reaction of at least one of CO₂, a bicarbonate ion, or a carbonic acid ion is performed from ions supplied from the anode catalyst layer 22A and a raw material fluid supplied through the first flow path structure 60. The reduction reaction of CO₂, a bicarbonate ion, or a carbonic acid ion occurs on the surface of the second cathode catalyst layer 17A. A gaseous gas product such as carbon monoxide or methane generated by the reduction reaction of at least one of CO₂, a bicarbonate ion, or a carbonic acid ion is discharged from the first outlet port 62. The reduced fluid discharged from the first outlet port 62 is recovered by the product recovery unit 162.

The second cathode catalyst layer 17A is preferably provided with a base material having conductivity and fluid permeability, and a catalyst composition carried on the base material. Examples of the base material having conductivity and fluid permeability include a metal mesh. Examples of the metal mesh include an Ag mesh.

The catalyst composition carried on the base material having conductivity and fluid permeability contains a catalyst. The amount of catalyst attached to the catalyst composition is preferably 1 mg/cm² to 5,000 mg/cm² per surface of the base material. The amount of catalyst attached to the base material per surface is more preferably 10 mg/cm² or more. The amount of catalyst attached to the base material per surface is still more preferably 50 mg/cm² or more.

The catalyst in the catalyst composition is a metal or a semiconductor. Examples of the metal include metals such as Ag, Au, Al, Cu, Pt, Pd, Ni, Sn, Zn, Fe, In, Ga, Cd, Pb, and Ti, or alloys containing these metals. Examples of the semiconductor include a P-type semiconductor having a potential of the lower end of the conductor on the negative side of the reduction potential of the carbon compound. Examples of the P-type semiconductor include Si, oxides such as Cu₂O and Fe₂O₃, phosphorus compounds such as InP and InGaP, and nitrogen compounds such as GaN. As the metal used as the catalyst, Ag or Cu is particularly preferable. The shape of the catalyst is not particularly limited. Examples of the shape of the catalyst include a particle shape, a scale shape, a columnar shape, and the like. As the catalyst, Ag particles, Cu particles, or alloy particles thereof are preferable. The catalyst can be appropriately selected according to the target product after reduction.

The average particle diameter of the catalyst is not particularly limited, but is 1 nm to 1000 µm.

The average particle diameter of the catalyst is more preferably 500 nm or less.

The catalyst composition may further contain a binder. The binder is not particularly limited, but for example, an electrolyte polymer is preferable. Examples of the electrolyte polymer include Nafion (registered trademark), which is a copolymer of a fluorine resin based on sulfonated tetrafluoroethylene. The content of the binder is, for example, 5% by mass to 50% by mass.

The catalyst composition may further contain a conductive auxiliary agent such as acetylene black or a carbon nanotube.

### "Electrolyte Membrane"

The electrolyte membrane 13 is a base material that forms the membrane electrode assembly 10A. The first cathode catalyst layer 17B and the anode catalyst layer 22A can be separated from each other, and some of the ions can be moved between the first cathode catalyst layer 17B and the anode catalyst layer 22A by the electrolyte membrane 13. The electrolyte membrane 13 is not particularly limited as long as the first cathode catalyst layer 17B and the anode catalyst layer 22A can be separated from each other, and some of the ions can be moved between the first cathode catalyst layer 17B and the anode catalyst layer 22A. Examples of the electrolyte membrane 13 include an ion exchange membrane. Examples of the ion exchange membrane include a Nafion (registered trademark) membrane, which is a copolymer of a fluorine resin based on sulfonated tetrafluoroethylene, and Sustainion (registered trademark) X37-50 Grade RT Membrane, which is a copolymer of styrene and vinyl benzyl chloride functionalized with 1-methylimidazole.

The thickness of the electrolyte membrane 13 is not particularly limited as long as the first cathode catalyst layer 17B and the anode catalyst layer 22A can be separated from each other, and some of the ions can be moved between the first cathode catalyst layer 17B and the anode catalyst layer 22A. For example, the thickness of the electrolyte membrane 13 is 5 µm to 500 µm.

### "Anode Catalyst Layer"

The anode catalyst layer 22A is provided on the electrolyte membrane 13. The anode catalyst layer 22A is electrically connected to the second flow path structure 70A via the fluid-permeable conductive membrane 50. The anode catalyst layer 22A promotes the oxidation of the electrolytic solution. It is preferable that the area of the anode catalyst layer 22A be equal to the area of the opening portion 40a of the second gasket 40. In the second embodiment, the anode catalyst layer 22A contains a catalyst (hereinafter, may be referred to as an anode catalyst). Examples of the material of the anode catalyst include Ir, Co, Ni, cobalt, Fe, iridium, and oxides of these metals (iridium oxide and cobalt oxide). The anode catalyst layer 22A oxidizes the electrolytic solution that flows in from a second inlet port 71A to generate oxygen, hydrogen ions, and the like. The product generated by oxidizing the electrolytic solution passes through a second outlet port 72A and is discharged. The discharged electrolytic solution after oxidation is recovered by the waste liquid recovery unit 172.

The shape of the catalyst of the anode catalyst layer 22A is not particularly limited, and examples thereof include a particle shape, a scale shape, and a columnar shape. In a case where the anode catalyst has a particle shape, the average particle diameter of the catalyst in the anode catalyst layer 22A is not particularly limited, but is 1 nm to 1000 nm. The average particle diameter of the catalyst is more preferably 500 nm or less.

The anode catalyst layer 22A may further contain a binder. The binder is not particularly limited, but for example, an electrolyte polymer is preferable. Examples of the electrolyte polymer include Nafion (registered trademark), which is a copolymer of a fluorine resin based on sulfonated tetrafluoroethylene. The content of the binder is, for example, 5% by mass to 50% by mass.

The thickness of the anode catalyst layer 22A is not particularly limited. For example, it is 0.5 mm to 10.0 mm.

### (Fluid-Permeable Conductive Membrane 50)

The fluid-permeable conductive membrane 50 is disposed between the anode catalyst layer 22A and the second flow path structure 70A. In addition, it is electrically connected to the anode catalyst layer 22A and is electrically connected to the second flow path structure 70A. The material of the fluid-permeable conductive membrane 50 is not particularly limited as long as the material has conductivity, and is, for example, a metal such as Ni, Ti, or Fe, or an alloy containing these metals. Since the material is insoluble and has high durability, the material of the fluid-permeable conductive membrane 50 is preferably Ti. In addition, the shape of the fluid-permeable conductive membrane 50 is not particularly limited as long as a fluid (for example, a potassium hydrogen carbonate aqueous solution) can be permeated, and may have a porous shape, a mesh shape, or a felt shape.

In the second embodiment, the fluid-permeable conductive membrane 50 is provided with a first fluid-permeable conductive membrane 51, a second fluid-permeable conductive membrane 52, and a third fluid-permeable conductive membrane 53 in this order.

The first fluid-permeable conductive membrane 51 is electrically connected to the anode catalyst layer 22A. The first fluid-permeable conductive membrane 51 is, for example, a conductive porous membrane such as Ti paper. In a case where the first fluid-permeable conductive membrane 51 is a conductive porous membrane, the void ratio of the first fluid-permeable conductive membrane 51 is, for example, 40% to 70%. When the void ratio of the first fluid-permeable conductive membrane 51 is 40% to 70%, good electrical conductivity of the anode catalyst layer can be ensured, the transmission of the electrolytic solution is not hindered, and the generated oxygen is released without being retained in the vicinity of the anode catalyst layer, which is preferable. The material of the first fluid-permeable conductive membrane 51 is not particularly limited as long as the material has conductivity, and is, for example, a metal such as Ni, Ti, or Fe, or an alloy containing these metals.

The second fluid-permeable conductive membrane 52 is electrically connected to the first fluid-permeable conductive membrane 51 and the third fluid-permeable conductive membrane 53. The second fluid-permeable conductive membrane 52 preferably has a mesh shape. The second fluid-permeable conductive membrane 52 has a mesh shape, and thus an effect of acting as a reinforcing support for the first fluid-permeable conductive membrane 51 is obtained. The wire diameter of the wire material constituting the mesh is, for example, 50 to 200 µm. The material of the second fluid-permeable conductive membrane 52 is not particularly limited as long as the material has conductivity, and is, for example, a metal such as Ni, Ti, or Fe, or an alloy containing these metals.

The third fluid-permeable conductive membrane 53 is electrically connected to the second fluid-permeable conductive membrane 52 and the second flow path structure 70A. The third fluid-permeable conductive membrane 53 preferably has a felt shape. When the third fluid-permeable conductive membrane 53 has a felt shape, an effect that oxygen generated in the anode catalyst layer is smoothly released from the fluid-permeable conductive membrane 50 can be obtained. The weight per unit area of the third fluid-permeable conductive membrane 53 is, for example, 50 to 200 gm⁻². The material of the third fluid-permeable conductive membrane 53 is not particularly limited as long as the material has conductivity, and is, for example, a metal such as Ni, Ti, or Fe, or an alloy containing these metals.

### (Second Gasket)

In the cell 100A, the second gasket 40 is disposed between the membrane electrode assembly 10A and the second flow path structure 70A to maintain airtightness. The material of the second gasket 40 is not particularly limited as long as the airtightness between the membrane electrode assembly 10A and the second flow path structure 70A can be maintained. Examples of the material of the second gasket 40 include silicone rubber.

The second gasket 40 includes an opening portion 40a. The fluid permeable conductive membrane 50 is accommodated in the opening portion 40a. Examples of the shape of the opening portion 40a of the second gasket 40 include a circular shape, an elliptical shape, a polygonal shape, and the like.

The thickness of the second gasket 40 is not particularly limited as long as the airtightness can be maintained. The thickness of the second gasket 40 is, for example, 1 mm.

### (Second Flow Path Structure)

In the cell 100A, the second flow path structure 70A is disposed in contact with the second gasket 40. The second flow path structure 70A is provided with the second inlet port 71A, the second outlet port 72A, and a flow path 73A. The second flow path structure 70A has conductivity and functions as an anode electrode. The second flow path structure 70A may have the same structure as that of the second flow path structure 70. The material of the second flow path structure 70A is, for example, a metal such as Ni, Ti, or Fe, or an alloy containing these metals.

The electrolytic solution delivery unit 171 delivers the electrolytic solution to the second inlet port 71A. The electrolytic solution that enters the second inlet port 71A passes through the opening 74a and enters the flow path 73A. In the flow path 73A, the oxidation reaction of the electrolytic solution by the anode catalyst layer 22A proceeds, and the electrolytic solution after the reaction (hereinafter, an electrolytic solution after oxidation) passes through the opening 74b and is discharged from the second outlet port 72A to the waste liquid recovery unit 172. The electrolytic solution delivery unit 171 includes, for example, a tank that stores the electrolytic solution, a pump, a flow rate control unit that controls the flow rate, and the like.

### (Electrode Contact Area, Exposed Area, Catalyst Contact Area, and Cathode Contact Area)

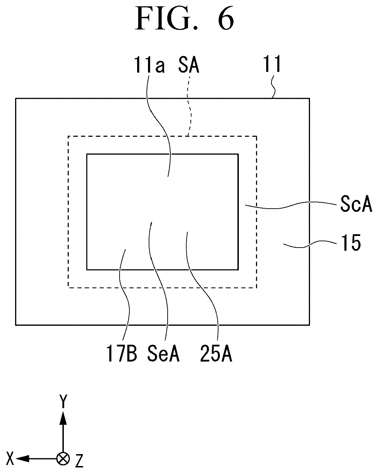

FIG. 6 shows a plan view of a state where the cathode electrode 11 and the membrane electrode assembly 10A are in contact with each other when viewed from the cathode electrode 11 side. In FIG. 6, the X direction and the Y direction are directions along the surface 15 of the cathode electrode 11. The Y direction is a direction orthogonal to the X direction. The Z direction is a direction orthogonal to the X direction and the Y direction.

The electrochemical reduction device 200A is provided with an exposed portion 25A in which the second cathode catalyst layer 17A is exposed in a state where the cathode electrode 11 and the second cathode catalyst layer 17A of the cathode catalyst layer 12A are in contact with each other.

An electrode contact area ScA, which is the area where the second cathode catalyst layer 17A and the cathode electrode 11 are in contact with each other, is smaller than an exposed area SeA, which is the area (area of the exposed portion 25A) in which the second cathode catalyst layer 17A is exposed.

In the present embodiment, the electrode contact area ScA is a difference (SA - SeA) between the area SA of the second cathode catalyst layer 17A and the exposed area SeA. Since the electrode contact area ScA is smaller than the exposed area SeA, the contact between the cathode electrode 11 and the electrolytic solution is suppressed, and the generation of hydrogen is suppressed. The electrode contact area ScA is not particularly limited as long as the reduction reaction of CO₂ can be sufficiently performed. The electrode contact area ScA is 80% or less of the exposed area SeA. The lower limit of the electrode contact area ScA is, for example, 1% of the exposed area SeA. The electrode contact area ScA is more preferably 10% or more of the exposed area SeA.

In the present embodiment, the cathode contact area, which is the area where the cathode electrode 11 and the raw material fluid are in contact with each other, is smaller than the catalyst contact area, which is the area where the exposed portion 25A of the cathode catalyst layer 12A and the raw material fluid are in contact with each other (area where the cathode catalyst layer 12A and the raw material fluid are in contact with each other). Since the cathode contact area is smaller than the catalyst contact area, it is possible to reduce the generation of hydrogen during the reduction reaction of CO₂. The cathode contact area is preferably 50% or less of the catalyst contact area. The catalyst contact area is more preferably 30% or less. The catalyst contact area is still more preferably 10% or less. Since the cathode contact area is preferably as small as possible, the lower limit is 0%. In a case where the cathode contact area is 0%, this means that the cathode electrode 11 and the raw material fluid are not in contact with each other.

The electrode contact area ScA, the exposed area SeA, the cathode contact area, and the catalyst contact area can be obtained, for example, by the same method as the method described in the first embodiment.

Hereinbefore, the electrochemical reduction device 200A according to the present embodiment has been described in detail. According to the electrochemical reduction device 200A of the present embodiment, the generation of hydrogen can be suppressed. Therefore, even in a case where the concentration of CO₂ is low, CO₂ can be efficiently reduced. In addition, since the electrochemical reduction device 200A according to the present embodiment is provided with the second cathode catalyst layer 17A, good electrical conductivity of the first cathode catalyst layer 17B can be ensured, and an effect of increasing the catalyst area can be obtained. Since the electrochemical reduction device 200A according to the present embodiment is provided with the fluid-permeable conductive membrane 50, an effect of suppressing the retention of oxygen bubbles that may block the reaction surface in the anode catalyst layer can be obtained.

### <Electrochemical Reduction Method>

Next, an electrochemical reduction method according to a second embodiment will be described. Hereinafter, a method of performing an electrochemical reduction method using the electrochemical reduction device 200A will be described, but the present invention is not limited to the method using the electrochemical reduction device 200A.

The electrochemical reduction method according to the present embodiment is provided with a raw material fluid delivery step of delivering a raw material fluid to the cathode catalyst layer 12A of the membrane electrode assembly 10A, an electrolytic solution delivery step of delivering an electrolytic solution to the anode catalyst layer 22A, and an electrochemical reduction step of electrochemically reducing at least one of CO₂, a bicarbonate ion, and a carbonic acid ion. In the present embodiment, for example, each step is performed in parallel.

### (Raw Material Fluid Delivery Step)

In the raw material fluid delivery step, the raw material fluid is delivered from the fluid delivery unit 161 to the cathode catalyst layer 12A of the membrane electrode assembly 10A. In addition, a product associated with the reduction reaction that occurs in the cathode catalyst layer 12A is delivered to the product recovery unit 162.

The raw material fluid is a mixture of at least one of CO₂, hydrogen carbonate, and carbonate, and at least one of a liquid and a gas. Examples of the raw material fluid include a gas containing CO₂, an electrolytic solution containing at least one of hydrogen carbonate and carbonate, and the like, but the raw material fluid is not limited thereto. As the raw material fluid, the same raw material fluid as that of the first embodiment can be used.

### (Electrolytic Solution Delivery Step)

In the electrolytic solution delivery step, the electrolytic solution is delivered to the anode catalyst layer 22A from the electrolytic solution delivery unit 171 via the fluid-permeable conductive membrane 50. In addition, a product associated with the oxidation reaction that occurs in the anode catalyst layer 22A is delivered to the waste liquid recovery unit 172 via the fluid-permeable conductive membrane 50.

The electrolytic solution is an electrolytic solution in which the solvent is water, an organic substance, or a mixture thereof. Examples of the electrolytic solution include an electrolytic solution containing at least one or more selected from the group consisting of a hydroxide ion, a potassium ion, a hydrogen ion, a sodium ion, a lithium ion, a chloride ion, a sulfate ion, a carbonic acid ion, and a nitrate ion. Examples of the electrolyte include potassium hydroxide and sodium hydroxide.

The pH of the electrolytic solution is 5 to 15. The pH of the electrolytic solution is preferably 6 or more. When the pH of the electrolytic solution is 5 to 15, the oxidation reaction in the anode catalyst layer 22A can easily proceed.

The flow rate of the electrolytic solution can be appropriately set according to the area of the anode catalyst layer 22A and the like.

### (Electrochemical Reduction Step)

In the electrochemical reduction step, at least one of CO₂, a bicarbonate ion, or a carbonic acid ion is electrochemically reduced. Specifically, a voltage is applied between the cathode electrode 11 and the second flow path structure 70A from the power source 140 to supply a current. When a current flows between the cathode electrode 11 and the second flow path structure 70A, an oxidation reaction proceeds in the vicinity of the anode catalyst layer 22A, and a reduction reaction proceeds in the vicinity of the cathode catalyst layer 12A. In the following reaction, CO is described as an example, but in the electrochemical reduction step, CH₄ or the like may be generated. The reaction between the cathode catalyst layer 12A and the anode catalyst layer 22A is the same as the reaction in the first embodiment.

The voltage applied between the second flow path structure 70A and the cathode electrode 11 is, for example, 0 V to - 4.0 V. The voltage is more preferably - 1.0 V to - 2.5 V. When the voltage is - 1.0 V to - 2.5 V, an electrochemical reduction reaction of CO₂ can proceed in a state where the energy conversion efficiency is higher.

Hereinbefore, the electrochemical reduction method according to the second embodiment has been described. According to the electrochemical reduction method of the present embodiment, the generation of hydrogen can be suppressed. Therefore, the reduction efficiency of CO₂ can be improved, and CO₂ can be efficiently reduced even in a case where the concentration of CO₂ is low.

The technical scope of the present invention is not limited to the above embodiments and it is possible to make various changes thereto in a range not departing from the gist of the present invention. In addition, it is possible to appropriately replace the constituent elements in the embodiments with well-known constituent elements in a range not departing from the gist of the present invention, and such embodiments may be combined as appropriate.

### Examples

Next, examples of the present invention will be described, but the conditions in the examples are merely examples of the conditions adopted to confirm the feasibility and effects of the present invention, and the present invention is not limited to these examples of the conditions. The present invention can adopt various conditions as long as the object of the present invention is achieved without departing from the gist of the present invention.

### (Cathode Catalyst Layer)

Silver nanoparticles (particle diameter of less than 100 nm, manufactured by Sigma-Aldrich Co., LLC) (40 mg), isopropanol (200 µL), deionized water (200 µL), and a Nafion (registered trademark) perfluorinated resin solution (manufactured by Sigma-Aldrich Co., LLC, 80 µL) were mixed and subjected to an ultrasonic treatment for 40 minutes to prepare a catalyst ink.

The obtained catalyst ink was sprayed onto the center portion of Nafion (registered trademark) 117 (an ion exchange membrane, 3 cm × 3 cm) manufactured by Chemours Company with an airbrush at an area of 2.3 cm × 2.3 cm, and dried in the atmosphere to prepare a cathode catalyst layer-forming electrolyte membrane. The amount of catalyst attached was adjusted to 2.5 mg/cm².

### (Anode Catalyst Layer)

Nickel foam (manufactured by MTI Corporation, Nickel Foam for Battery Cathode Substrate, 2.2 cm × 2.2 cm, thickness: 1.6 mm, purity > 99.99%) was used as a catalyst (anode catalyst layer) on the side of the electrode for the oxidation reaction.

### (Confirmation Experiment using Potassium Hydrogen Carbonate Aqueous Solution)

When carbon dioxide (CO₂) in the air is recovered using a potassium hydroxide aqueous solution as an electrolytic solution, a potassium hydrogen carbonate aqueous solution is generated. A reduction experiment of the electrochemical reduction device of the present disclosure was performed using the potassium hydrogen carbonate aqueous solution.

### (Example 1-1)

As the electrochemical reduction device, the two-electrode electrochemical reduction device shown in FIG. 1 was used. A silver plate (manufactured by NIRAKO Co., Ltd., AG-403324, 40 mm × 55 mm, thickness 0.10 mm, purity 99.89% by mass) was used as an electrode on the working pole (cathode), and a titanium foil (manufactured by NIRAKO Co., Ltd., TI-453262, 40 mm × 55 mm, thickness 0.05 mm, 99.5%) was used as a counter electrode (anode) (electrode for the oxidation reaction). In addition, the one prepared above was used as the cathode catalyst layer-forming electrolyte membrane. Nickel foam was used as the anode catalyst layer. The cathode catalyst layer-forming electrolyte membrane and the anode catalyst layer were laminated to form a membrane electrode assembly.

As the first flow path structure, a structure in which a flow path having a width of 1 mm was formed in a formation region of 2 cm × 2 cm in a central portion on a side in contact with the first gasket was used. Silicone rubber (in the case of a liquid: thickness of 1 mm, in the case of a gas 0.5 mm) was used for the first gasket. A square opening portion of 2.2 cm × 2.2 cm was provided at the center of the first gasket. A silver plate was used as a cathode electrode, and the square opening portion of 2.2 cm × 2.2 cm was provided. Silicone rubber (thickness 1 mm) was used as the second gasket. The square opening portion of 2.2 cm × 2.2 cm was provided at the center of the second gasket. The square opening portion of 2.2 cm × 2.2 cm was provided in a titanium foil used as the anode electrode. As the second flow path structure, a structure in which a flow path having a width of 1 mm was formed in a formation region of 2 cm × 2 cm in a central portion on a side in contact with the second gasket was used. In the cell, the first flow path structure, the first gasket, the cathode electrode, the membrane electrode assembly, the anode electrode, the second gasket, and the second flow path structure were laminated in this order and each of the members was fixed to be in close contact with each other. The cathode electrode and the cathode catalyst layer were in contact with each other, and the anode catalyst layer and the anode electrode were in contact with each other.

A 3.0 M potassium hydrogen carbonate aqueous solution (pH 8.33) was used as an electrolytic solution on the cathode side and a supply source of carbon dioxide, and a 1.0 M potassium hydroxide aqueous solution (pH 14.1) was used as an electrolytic solution on the anode (electrode for the oxidation reaction) side.

The cathode and the anode were connected to an electrochemical measurement system (manufactured by Solartron analytical, 1280Z), and a voltage of - 2.1 V (entire cell) was applied to the cathode for 10 minutes to perform an electrochemical measurement, while an electrolytic solution on the cathode side (supply source of carbon dioxide) was circulated at 3.0 mL/min and an electrolytic solution on the anode (electrode for the oxidation reaction) side was circulated at 3.0 mL/min. Micro GC (FUSION, manufactured by INFICON) was used for the identification and quantification of the product associated with the electrochemical measurement.

### (Example 1-2)

The measurement was performed in the same manner as in Example 1-1, except that a 2.0 M potassium hydrogen carbonate aqueous solution was used as the electrolytic solution on the cathode side (supply source of carbon dioxide).

### (Example 1-3)

The measurement was performed in the same manner as in Example 1-1, except that a voltage of - 2.0 V (entire cell) was applied to the cathode.

**[Table 1]**

| | Amount of generation | | Current efficiency | |
|---|---|---|---|---|
| | (µmol) | | (%) | |
| | Carbon monoxide | Hydrogen | Carbon monoxide | Hydrogen |
| Example 1-1 | 35 | 8.2 | 79.9 | 18.6 |
| Example 1-2 | 70.5 | 5.3 | 98.7 | 7.4 |
| Example 1-3 | 33.4 | 3.3 | 86.2 | 8.5 |

The results obtained are shown in Table 1. In Example 1-1 in which a 3.0 M potassium hydrogen carbonate aqueous solution was used as the electrolytic solution on the cathode side (raw material fluid) and the supply source of carbon dioxide, the generation of carbon monoxide of 35.0 µmol and hydrogen of 8.2 µmol was observed, and each of the current efficiencies was 79.9% and 18.6%. In Example 1-2 in which a 2.0 M potassium hydrogen carbonate aqueous solution was used as the electrolytic solution on the cathode side and the supply source of carbon dioxide, the amount of carbon monoxide generated was increased to 70.5 µmol by approximately twice compared with that in Example 1-1, and the hydrogen generation was suppressed by approximately 35% and decreased to 5.3 µmol. Each of the current efficiencies was 98.7% and 7.4%, which indicates high carbon monoxide selectivity.

In Example 1-3 in which a 3.0 M potassium hydrogen carbonate aqueous solution was used as the electrolytic solution on the cathode side and the supply source of carbon dioxide and the applied voltage was - 2.0 V, the amount of carbon monoxide generated was 33.4 µmol, which was not significantly different from that in Example 1, but the amount of hydrogen generated was suppressed by approximately 40% compared with that in Example 1, and was 3.3 µmol.

Therefore, the current efficiencies were 86.2% for carbon monoxide and 8.5% for hydrogen, which were improved compared with that in Example 1.

From the above results, it was confirmed that the bicarbonate ion of the generated potassium hydrogen carbonate aqueous solution can be converted into carbon monoxide in one step by the electrochemical reduction using the electrochemical reduction device of the present disclosure. In addition, it was confirmed that carbon monoxide was generated with a high current efficiency of 98.7% while suppressing hydrogen generation by setting the potassium hydrogen carbonate aqueous solution used as the electrolytic solution on the cathode side and the supply source of carbon dioxide to 2.0 M. In a case where a gas diffusion layer was used as the cathode electrode, the experiment of KHCO₃ could not be performed. In addition, in a case where a gas containing 12% by volume of oxygen (purity > 99.9% by volume) was supplied using a gas diffusion layer of a carbon fiber material that was used normally, not only no generation of CO was confirmed, but also no hydrogen was generated.

### (Electrochemical Reduction using Electrolytic Solution)

Next, using the electrochemical reduction device used in Example 1-1, a reduction experiment of CO₂ was performed assuming that carbon dioxide in the air was contained in the electrolytic solution.

### (Example 2-1)

An electrolytic solution on the cathode side (raw material fluid: supply source of carbon dioxide) and an electrolytic solution on the anode (electrode for the oxidation reaction) side were circulated at 1.0 mL/min. As the electrolytic solution on the cathode side, a solution in which carbon dioxide (purity > 99.5% by volume) was bubbled in a 0.85 M potassium hydroxide aqueous solution for 18 hours and the pH was 7.91 was used. The measurement was performed under the same conditions as those in Example 1-1, except that the electrolytic solution on the cathode side (supply source of carbon dioxide) was changed.

### (Example 2-2)

The measurement was performed under the same conditions as those in Example 2-1, except that the bubbled gas was changed to a mixed gas having a proportion of 60% by volume of nitrogen (purity > 99.9% by volume) and 40% by volume of carbon dioxide (purity > 99.5% by volume).

### (Example 2-3)

The measurement was performed under the same conditions as those in Example 2-1, except that the bubbled gas was changed to a mixed gas having a proportion of 48% by volume of nitrogen (purity > 99.9% by volume), 40% by volume of carbon dioxide (purity > 99.5% by volume), and 12% by volume of oxygen (purity > 99.9% by volume).

### (Example 2-4)

The measurement was performed under the same conditions as those in Example 2-1, except that the bubbled gas was changed to a mixed gas having a proportion of 1% by volume of carbon dioxide (purity > 99.5% by volume) and 99% by volume of air, the bubbling time was set to 3 days, and the solution having a pH of 9.20 was changed to an electrolytic solution on the cathode side (supply source of carbon dioxide).

### (Example 2-5)

The measurement was performed under the same conditions as those in Example 2-4, except that a voltage of - 2.3 V was applied to the cathode.

**[Table 2]**

| | Amount of generation | | Current efficiency | |
|---|---|---|---|---|
| | (µmol) | | (%) | |
| | Carbon monoxide | Hydrogen | Carbon monoxide | Hydrogen |
| Example 2-1 | 38.6 | 4.6 | 86 | 10.3 |
| Example 2-2 | 27.4 | 4.6 | 60.9 | 10.3 |
| Example 2-3 | 22.9 | 4.2 | 72.8 | 13.3 |
| Example 2-4 | 3.4 | 1.1 | 23.5 | 7.4 |
| Example 2-5 | 8.3 | 3.5 | 38.3 | 16.4 |

Table 2 shows the amount of carbon monoxide (CO) generated and the amount of hydrogen generated and the current efficiencies, which are generated by performing the electrochemical reduction reaction under the conditions of Examples 2-1 to 2-5. In Example 2-1 in which a solution obtained by bubbling a 0.85 M potassium hydroxide aqueous solution with carbon dioxide gas for 18 hours was used as the electrolytic solution on the cathode side (supply source of carbon dioxide), the generation of carbon monoxide of 38.6 µmol and hydrogen of 4.6 µmol was observed. Carbon monoxide was generated in the same manner as in Example 1-1 (carbon monoxide of 35.0 µmol and hydrogen of 8.2 µmol) in which a 3.0 M potassium hydrogen carbonate was used as the electrolytic solution on the cathode side. In addition, since the amount of hydrogen generated was suppressed to approximately half, the current efficiency of carbon monoxide was improved by approximately 6% compared with that of Example 1-1 (79.9%), and was 86.0%.

Next, in Example 2-2 in which a solution obtained by bubbling a mixed gas made of 60% by volume of nitrogen and 40% by volume of carbon dioxide in a 0.85 M potassium hydroxide aqueous solution for 18 hours was used as the electrolytic solution on the cathode side (supply source of carbon dioxide) as a model of a mixed gas having a low concentration of carbon dioxide obtained by carbon dioxide recovery in the air, the amount of carbon monoxide generated was decreased to 27.4 µmol by approximately 30% compared with Example 2 in which only carbon dioxide was bubbled. The amount of hydrogen generated was 4.6 µmol, and there was no change. Therefore, the current efficiency was 60.9% for carbon monoxide and 10.3% for hydrogen, and the selectivity of carbon monoxide was decreased.

In Example 2-3 in which a mixed gas made of 48% by volume of nitrogen (purity > 99.9% by volume), 40% by volume of carbon dioxide (purity > 99.5% by volume), and 12% by volume of oxygen (purity > 99.9% by volume) was bubbled in a 0.85 M potassium hydroxide aqueous solution for 18 hours and used as the electrolytic solution on the cathode side (supply source of carbon dioxide), the amount of carbon monoxide generated was decreased to 22.9 µmol by approximately 40% compared with Example 2-1 in which only carbon dioxide was bubbled. The amount of hydrogen generated was 4.2 µmol, and there was no significant change. The current efficiency was 72.8% for carbon monoxide and 13.3% for hydrogen, and the selectivity of carbon monoxide was reduced by approximately 13%. Comparing Example 2-3 with Example 2-2 in which a 0.85 M potassium hydroxide aqueous solution in which a mixed gas of only nitrogen and carbon dioxide was bubbled was used, it was clear that the current efficiency of carbon monoxide was improved by 10% or more in Example 2-3 in which a mixed gas containing oxygen was used.

The results of using a mixed gas having a proportion of 1% by volume of carbon dioxide (purity > 99.5% by volume) and 99% by volume of air are shown in Example 2-4 and Example 2-5. In Example 2-4 and Example 2-5, only when the mixed gas was bubbled in a 0.85 M potassium hydroxide aqueous solution for 18 hours, the pH of the potassium hydroxide aqueous solution was not sufficiently decreased, and as a result, the pH was decreased to 9.20 by bubbling for 3 days. Using this electrolytic solution, and applying - 2.1 V to the cathode, each of carbon monoxide of 3.4 µmol and hydrogen of 1.1 µmol was generated at the current efficiency of 23.5% and 7.4%. However, the amount of carbon monoxide generated was decreased by approximately 12% and the current efficiency was decreased by approximately 30% to 40% compared with those in Example 2-2 or Example 2-3 in which a mixed gas having a relatively high concentration of carbon dioxide was used.

In Example 2-5 in which the applied voltage of Example 2-4 was changed to - 2.3 V, each of carbon monoxide of 8.3 µmol and hydrogen of 3.5 µmol was generated at the current efficiency of 38.3% and 16.4%. Compared with Example 2-4 in which the applied voltage was - 2.1 V, it was found that the amount of carbon monoxide generated was improved by 144% and the current efficiency of carbon monoxide was improved by 62%.

From the above results, it was confirmed that a solution obtained by bubbling a mixed gas containing 12% by volume of oxygen, which is a model reaction for carbon dioxide recovery in the air by direct air capture (DAC), in a 0.85 M potassium hydroxide aqueous solution was used as the electrolytic solution on the cathode side and the supply source of carbon dioxide, and synthesis was performed by electrochemical reduction of carbon monoxide, which is a raw material for a chemical product or a fuel. From this result, it was possible to verify the carbon dioxide recovery in the air to the reduction reaction using a model experiment or model reaction. In addition, it was confirmed that carbon monoxide was generated by carbon dioxide reduction even in a case where a mixed gas having a low concentration of carbon dioxide in which the concentration of carbon dioxide was 1% by volume was used. The maximum value of carbon dioxide in the air that can be thickened by direct air capture (DAC) using a separation membrane is currently 1% by volume. It was confirmed that carbon monoxide can be obtained while suppressing hydrogen generation by using the carbon dioxide-containing gas obtained from DAC by using the electrochemical reduction device according to the present embodiment.

### (Electrochemical Reduction using Mixed Gas)

Next, a reduction experiment was performed with a mixed gas using the electrochemical reduction device used in Example 1-1.

### (Example 3-1)

The measurement was performed under the same conditions as those in Example 1-1, except that the thickness of the first gasket was changed from 1.0 mm to 0.5 mm and a carbon dioxide gas (purity > 99.5% by volume) was circulated at 15 mL/min instead of the electrolytic solution on the cathode side.

### (Example 3-2)

The measurement was performed under the same conditions as those in Example 3-1, except that the amount of Nafion (registered trademark) perfluorinated resin solution mixed with the catalyst ink was set to (160 µL).

### (Example 3-3)

The measurement was performed under the same conditions as those in Example 3-1, except that the gas circulating on the cathode side was changed to a mixed gas having a proportion of 60% by volume of nitrogen (purity > 99.9% by volume) and 40% by volume of carbon dioxide (purity > 99.5% by volume).

### (Example 3-4)

The measurement was performed under the same conditions as those in Example 3-1, except that the gas circulating on the cathode side was changed to a mixed gas having a proportion of 48% by volume of nitrogen (purity > 99.9% by volume), 40% by volume of carbon dioxide (purity > 99.5% by volume), and 12% by volume of oxygen (purity > 99.9% by volume).

**[Table 3]**

| | Amount of generation | | Current efficiency | |
|---|---|---|---|---|
| | (µmol) | | (%) | |
| | Carbon monoxide | Hydrogen | Carbon monoxide | Hydrogen |
| Example 1-1 | 35 | 8.2 | 79.9 | 18.6 |
| Example 3-1 | 80.3 | 2.6 | 84.5 | 2.7 |
| Example 3-2 | 100 | 4.3 | 92.3 | 3.9 |
| Example 3-3 | 39 | 2.9 | 81.8 | 6.1 |
| Example 3-4 | 17.6 | 3.3 | 52 | 9.8 |

Table 3 shows the amounts of carbon monoxide (CO) and hydrogen generated by performing the electrochemical reduction reaction under the conditions of Example 1-1 and Examples 3-1 to 3-4, and the current efficiency.

In the case of Example 3-1 in which the carbon dioxide gas was directly supplied to the cathode side, each of carbon monoxide of 80.3 µmol and hydrogen of 2.6 µmol was generated at the current efficiency of 84.5% and 2.7%. As a result, when comparing this result with Example 1-1 in which a 3.0 M potassium hydrogen carbonate aqueous solution was used as the electrolytic solution on the cathode side and the supply source of carbon dioxide, it was found that hydrogen generation was significantly suppressed. In Example 3-2 in which a catalyst ink obtained by mixing 20% by mass of a Nafion (registered trademark) perfluorinated resin solution with the silver nanoparticle catalyst was used, each of carbon monoxide of 100.0 µmol and hydrogen of 4.3 µmol was generated at the current efficiency of 92.3% and 3.9%. In Example 3-2, both the amount of carbon monoxide generated and the current efficiency were significantly improved compared with those in Example 3-1 in which 10% by mass of the Nafion (registered trademark) solution was mixed.

In Example 3-3 in which a gas having a proportion of 60% by volume of nitrogen (purity > 99.9% by volume) and 40% by volume of carbon dioxide (purity > 99.5% by volume) was used as the gas circulating on the cathode side, each of carbon monoxide of 39.0 µmol and hydrogen of 2.9 µmol was generated at the current efficiency of 81.8% and 9.8%. When comparing Example 3-2 with Example 3-1 in which only carbon dioxide was circulated, the amount of carbon monoxide generated was reduced by approximately half, but the current efficiency in both cases was in the first half of 80%, and thus did not significantly change.

In Example 3-4 in which a mixed gas having a proportion of 48% by volume of nitrogen (> 99.9%), 40% by volume of carbon dioxide (purity > 99.5% by volume), and 12% by volume of oxygen (purity > 99.9% by volume) was used as a gas circulating on the cathode side, each of carbon monoxide of 17.6 µmol and hydrogen of 3.3 µmol was generated at the current efficiency of 52.0% and 9.8%. It was confirmed that in the electrochemical reduction device according to the present embodiment, the reduction of carbon dioxide selectively proceeded with a current efficiency of 50% or more even in a case where a mixed gas containing 12% of oxygen was used.

From the above results, it was clear that the carbon dioxide reduction reaction was performed even in a case where the electrolyte was not present on the cathode side. In addition, it was found that both the amount of carbon monoxide generated and the current efficiency were improved by adjusting the Nafion (registered trademark) solution mixed with the catalyst ink to 20% by mass with respect to the silver nanoparticle catalyst. It was confirmed that even in a case where a mixed gas in which 12% by volume of oxygen and 48% by volume of nitrogen coexist was used as a carbon dioxide source, the reduction reaction of carbon dioxide can be performed with a current efficiency of 50% or more using the electrochemical reduction device according to the present embodiment.

### (Example 4-1)

40 mg of silver nanoparticles (particle diameter of less than 100 nm, manufactured by Sigma-Aldrich Co., LLC), 200 µL of isopropanol, 200 µL of deionized water, and 80 µL of Nafion (registered trademark) perfluorinated resin solution (manufactured by Sigma-Aldrich Co., LLC) were mixed and subjected to an ultrasonic treatment for 40 minutes to prepare a cathode catalyst ink.

The obtained cathode catalyst ink was sprayed onto the center portion of Nafion (registered trademark) 117 (an ion exchange membrane, 3 cm × 3 cm) manufactured by Chemours Company with an airbrush at an area of 2.3 cm × 2.3 cm, and dried in the atmosphere to prepare a cathode catalyst layer-forming electrolyte membrane. The amount of catalyst attached was adjusted to 2.5 mg/cm².

The obtained cathode catalyst ink was sprayed onto the center portion of a silver mesh (wire diameter: 0.1, opening size: 0.154, opening ratio: 36.8) manufactured by Clever Co., Ltd. with an area of 2.3 cm × 2.3 cm using an airbrush and dried in the atmosphere. The amount of catalyst attached was adjusted to 2.5 mg/cm², and a second cathode catalyst membrane (second cathode catalyst layer) of Example 4-1 was obtained. The second cathode catalyst membrane of Example 4-1 to which the catalyst ink was applied functions as a catalyst layer. The catalyst layer was formed on both surfaces of the Ag mesh.

Nickel foam (manufactured by MTI Corporation, Nickel Foam for Battery Cathode Substrate, 2.2 cm × 2.2 cm, thickness: 1.6 mm, purity > 99.99%) was used as a catalyst (anode catalyst layer) on the side of the electrode for the oxidation reaction.

The second cathode catalyst membrane (second cathode catalyst layer) of Example 4-1, the cathode catalyst layer-forming electrolyte membrane, and the anode catalyst layer were laminated in this order to form a membrane electrode assembly. In addition, as the second flow path structure, a structure made of Ti, in which a flow path having a width of 1 mm was formed in a formation region of 2 cm × 2 cm in the central portion on the side in contact with the second gasket was used. For other conditions, measurement was performed under the same conditions as those in Example 1-1. The second flow path structure made of Ti functions as an anode.

### (Example 4-2)

40 mg of silver nanoparticles (particle diameter of less than 100 nm, manufactured by Sigma-Aldrich Co., LLC), 200 µL of isopropanol, 200 µL of deionized water, and 80 µL of a Nafion (registered trademark) perfluorinated resin solution (manufactured by Sigma-Aldrich Co., LLC) were mixed and subjected to an ultrasonic treatment for 40 minutes to prepare a cathode catalyst ink.

The obtained cathode catalyst ink was sprayed onto the center portion of Nafion (registered trademark) 117 (an ion exchange membrane, 3 cm × 3 cm) manufactured by Chemours Company with an airbrush at an area of 2.3 cm × 2.3 cm, and dried in the atmosphere to prepare a cathode catalyst layer-forming electrolyte membrane. The amount of catalyst attached was adjusted to 2.5 mg/cm².

The obtained cathode catalyst ink was sprayed onto the center portion of carbon felt (E-525) manufactured by Kureha Corporation with an area of 2.3 cm × 2.3 cm using an airbrush and dried in the atmosphere. The amount of catalyst attached was adjusted to 2.5 mg/cm², and a second cathode catalyst membrane (second cathode catalyst layer) of Example 4-2 was prepared. The carbon felt plays a role in ensuring good electrical conductivity in the cathode catalyst layer. The catalyst layer was formed on both surfaces of the carbon felt.

Iridium oxide nanoparticles (particle diameter of less than 100 nm, manufactured by Sigma-Aldrich Co., LLC) (40 mg), isopropanol (240 µL), deionized water (240 µL), and a Nafion (registered trademark) perfluorinated resin solution (manufactured by Sigma-Aldrich Co., LLC, 240 µL) were mixed and subjected to an ultrasonic treatment for 40 minutes to prepare an anode catalyst ink.

The obtained anode catalyst ink was sprayed onto the center portion of the surface of the cathode catalyst layer-forming electrolyte membrane opposite to the surface on which the cathode catalyst layer was formed with an airbrush at an area of 2.3 cm × 2.3 cm, and dried in the atmosphere to prepare an anode catalyst layer-forming electrolyte membrane. The amount of catalyst attached was adjusted to 10 mg/cm². In order to ensure good electrical conductivity, titanium paper (WEBTi (registered trademark)-K, thickness 0.025 mm, void ratio 40%) manufactured by Toho Titanium Co., Ltd., and Ti mesh (100 mesh, Ti wire diameter 100 µm, twill weave) manufactured by Manabe Kogyo Co., Ltd. were overlapped on the surface of the Nafion membrane to which the anode catalyst was applied, and hot-pressed to obtain a membrane electrode assembly of Example 4-2.

The second cathode catalyst membrane of Example 4-2, the membrane electrode assembly of Example 4-2, and Ti felt (Ti wire diameter of approximately 20 µm, Ti weight per unit area of 150 gm⁻²) manufactured by NIKKO TECHNO, Ltd. were laminated in this order to form a membrane electrode assembly. As the second flow path structure, a structure made of Ti, in which a flow path having a width of 1 mm was formed in a formation region of 2 cm × 2 cm in the central portion on the side in contact with the second gasket was used. For other conditions, measurement was performed under the same conditions as those in Example 1-1. The second flow path structure made of Ti functions as an anode.

### (Example 4-3)

40 mg of silver nanoparticles (particle diameter of less than 100 nm, manufactured by Sigma-Aldrich Co., LLC), 200 µL of isopropanol, 200 µL of deionized water, and 80 µL of a Nafion (registered trademark) perfluorinated resin solution (manufactured by Sigma-Aldrich Co., LLC) were mixed and subjected to an ultrasonic treatment for 40 minutes to prepare a cathode catalyst ink.

The obtained cathode catalyst ink was sprayed onto the center portion of Nafion (registered trademark) 117 (an ion exchange membrane, 3 cm × 3 cm) manufactured by Chemours Company with an airbrush at an area of 2.3 cm × 2.3 cm, and dried in the atmosphere to prepare a cathode catalyst layer-forming electrolyte membrane. The amount of catalyst attached was adjusted to 2.5 mg/cm².

The obtained cathode catalyst ink was sprayed onto the center portion of a silver porous body (MF-40, thickness 0.3 mm) manufactured by NAGAMINE MANUFACTURING Co., Ltd. with an area of 2.3 cm × 2.3 cm using an airbrush and dried in the atmosphere. The amount of catalyst attached was adjusted to 2.5 mg/cm², and a second cathode catalyst membrane (second cathode catalyst layer) of Example 4-3 was prepared. The catalyst layer was formed on both surfaces of the silver porous body.

Iridium oxide nanoparticles (particle diameter of less than 100 nm, manufactured by Sigma-Aldrich Co., LLC) (40 mg), isopropanol (240 µL), deionized water (240 µL), and a Nafion (registered trademark) perfluorinated resin solution (manufactured by Sigma-Aldrich Co., LLC, 240 µL) were mixed and subjected to an ultrasonic treatment for 40 minutes to prepare an anode catalyst ink.

The obtained anode catalyst ink was sprayed onto the center portion of the surface of the cathode catalyst layer-forming electrolyte membrane opposite to the surface on which the cathode catalyst layer was formed with an airbrush at an area of 2.3 cm × 2.3 cm, and dried in the atmosphere to prepare an anode catalyst layer-forming electrolyte membrane. The amount of catalyst attached was adjusted to 10 mg/cm². In order to ensure good electrical conductivity, titanium paper (WEBTi (registered trademark)-K, thickness 0.025 mm, void ratio 40%) manufactured by Toho Titanium Co., Ltd., and Ti mesh (100 mesh, Ti wire diameter 100 µm, twill weave) manufactured by Manabe Kogyo Co., Ltd. were overlapped on the surface of the Nafion membrane to which the anode catalyst was applied, and hot-pressed to obtain a membrane electrode assembly of Example 4-3.

The second cathode catalyst membrane of Example 4-3, the membrane electrode assembly of Example 4-3, and Ti felt (Ti wire diameter of approximately 20 µm, Ti weight per unit area 150 gm⁻²) manufactured by NIKKO TECHNO, Ltd. were laminated in this order to form a membrane electrode assembly. As the second flow path structure, a structure made of Ti, in which a flow path having a width of 1 mm was formed in a formation region of 2 cm × 2 cm in the central portion on the side in contact with the second gasket was used. For other conditions, measurement was performed under the same conditions as those in Example 1-1. The second flow path structure made of Ti functioned as an anode electrode.

### (Confirmation Experiment using Potassium Hydrogen Carbonate Aqueous Solution)

When carbon dioxide (CO₂) in the air is recovered using a potassium hydroxide aqueous solution as an electrolytic solution, a potassium hydrogen carbonate aqueous solution is generated. In Example 4-1, a reduction experiment of the electrochemical reduction device was performed using a potassium hydroxide aqueous solution and recovering carbon dioxide. Reduction experiments of the electrochemical reduction device of Examples 4-2 and 4-3 were performed using a potassium hydrogen carbonate aqueous solution.

**[Table 4]**

| | Current efficiency | | Current density | |
|---|---|---|---|---|
| | (%) | | (mA cm⁻²) | |
| | Carbon monoxide | Hydrogen | Carbon monoxide | Hydrogen |
| Example 4-1 (1 M KOH, 2.3 V) | 61.9 | 31.8 | 8.3 | 4.2 |
| Example 4-2 (2 M KHCO₃, 3.2 V) | 6.9 | 92.1 | 26.1 | 344.7 |
| Example 4-3 (2 M KHCO₃, 3.2 V) | 12.6 | 91.5 | 159 | 1148 |

The results obtained are shown in Table 4. In Example 4-1, generation was observed at a current efficiency of 61.9% for carbon monoxide and 31.8% for hydrogen, and each of the partial current densities was 8.3 mA/cm² and 4.2 mA/cm². In Example 4-2, generation was observed at a current efficiency of 6.9% for carbon monoxide and 92.1% for hydrogen, and each of the partial current densities was 26.1 mA/cm² and 344.7 mA/cm². In Example 4-3, generation was observed at a current efficiency of 12.6% for carbon monoxide and 91.5% for hydrogen, and each of the partial current densities was 159 mA/cm² and 1148 mA/cm². In all of Examples 4-1 to 4-3 using the second cathode membrane, carbon monoxide was generated with high current efficiency. In addition, in Example 4-2 and Example 4-3 in which IrO₂ was used as the anode catalyst, and Ti paper, Ti mesh, and Ti felt, which are gas-permeable conductive membranes were used, the current density was particularly high.

### INDUSTRIAL APPLICABILITY

The electrochemical reduction device according to the present invention can suppress the generation of hydrogen and can efficiently reduce or hydrogenate CO₂ from a CO₂ fluid having a low concentration, and thus industrial applicability is high.

### REFERENCE SIGNS LIST

10: Membrane electrode assembly
11: Cathode electrode
12: Cathode catalyst layer
13: Electrolyte membrane
21: Anode electrode
22: Anode catalyst layer
25: Exposed portion
30: First gasket
40: Second gasket
60: First flow path structure
70: Second flow path structure
100: Cell
200: Electrochemical reduction device

## Claims

1. An electrochemical reduction device comprising:
a cell that includes a membrane electrode assembly, a cathode electrode, and an anode electrode; and
a fluid delivery unit configured to deliver a raw material fluid, which is a fluid containing at least one of CO₂, hydrogen carbonate, and carbonate, to the cell, wherein
the membrane electrode assembly includes
an electrolyte membrane, and
a cathode catalyst layer provided on the electrolyte membrane and that contains a catalyst,
in a state where the cathode electrode and the cathode catalyst layer are in contact with each other, the cathode catalyst layer is exposed, and
the cathode electrode and the raw material fluid are not in contact with each other, or
a cathode contact area, which is an area where the cathode electrode and the raw material fluid are in contact with each other, is smaller than a catalyst contact area, which is an area where an exposed portion in which the cathode catalyst layer is exposed, and the raw material fluid are in contact with each other.

2. The electrochemical reduction device according to Claim 1, wherein
the cathode contact area is 50% or less of the catalyst contact area.

3. The electrochemical reduction device according to Claim 1, wherein
the cathode electrode includes an opening portion,
the catalyst contact area is an area of the opening portion, and
the cathode contact area is a product of an inner peripheral length of the opening portion and a thickness of the cathode electrode.

4. The electrochemical reduction device according to Claim 1, wherein
the catalyst is a metal or a semiconductor.

5. The electrochemical reduction device according to Claim 1, wherein
a content of the catalyst is 10% by mass or more with respect to a total mass of the cathode catalyst layer.

6. The electrochemical reduction device according to Claim 1, wherein
the catalyst is Ag nanoparticles.

7. The electrochemical reduction device according to Claim 1, wherein
at least part of the cathode electrode is covered with an insulator or a catalyst.

8. The electrochemical reduction device according to Claim 1, wherein
the raw material fluid is a gas containing the CO₂.

9. The electrochemical reduction device according to Claim 1, wherein
the raw material fluid is an electrolytic solution containing at least one of the hydrogen carbonate and the carbonate.

10. The electrochemical reduction device according to Claim 9, further comprising:
a hydrogen carbonate-containing electrolytic solution generation unit configured to generate the electrolytic solution containing at least one of the hydrogen carbonate and the carbonate by bringing the CO₂ into contact with an electrolytic solution.
